# EUROPEAN PATENT APPLICATION

(11) **EP 4 613 609 A1**
(43) Date of publication of application: **10.09.2025**
(21) Application number: 25161529.0
(22) Date of filing: 04.03.2025
(51) Int. Cl.: B62B 7/06, B62B 9/20, E05D 11/10

(54) **CONNECTING STRUCTURE, CHILD CARRYING DEVICE, FRAME, AND CHILD CARRIER**

(30) Priority: 04.03.2024 CN 202410245771; 03.07.2024 CN 202410888301; 06.09.2024 CN 202411253488
(71) Applicant: Wonderland Switzerland AG, 6312 Steinhausen (CH)
(72) Inventor: HU, Shoufeng, Guangdong, 523648 (CN); YI, Xiaolong, Guangdong, 523648 (CN); WANG, Erxue, Guangdong, 523648 (CN)
(74) Representative: Lucke, Andreas

(57) **Abstract**

A connecting structure is provided, including: a first joint component and a second joint component pivotable relative to each other around an axial direction; and a connecting member extending through the second joint component in the axial direction and inserted into and screwedly connected to the first joint component to restrict a separation of the first joint component from the second joint component in a direction parallel to the axial direction. The connecting member is spaced apart from the second joint component.

## Description

### TECHNICAL FIELD

The present disclosure relates to a connecting structure, a child carrying device, a frame, and a child carrier.

### BACKGROUND

Due to their convenience for storage and transport, the foldable strollers in the market are widely favored by consumers. However, there is still room for improvement in current strollers to meet the needs of modern families and enhance the user's experience.

### SUMMARY

In a first aspect, the present disclosure provides a connecting structure, including: a first joint component and a second joint component pivotable relative to each other around an axial direction; and a connecting member extending through the second joint component in the axial direction and inserted into and fixedly, in particular screwedly, connected to the first joint component to restrict the separation of the first joint component from the second joint component in a direction parallel to the axial direction. The connecting member is spaced apart from the second joint component.

In an embodiment, the first joint component is positioned between the connecting member and the second joint component in a radial direction perpendicular to the axial direction to space apart the connecting member from the second joint component in the radial direction.

In an embodiment, the first joint component includes a shaft portion extending through the second joint component in the direction parallel to the axial direction. The shaft portion is positioned between the connecting member and the second joint component in the radial direction.

In an embodiment, the connecting member is provided with a head portion and a rod portion extending from the head portion in the axial direction. The rod portion is inserted into the shaft portion along the axial direction and threadedly connected to the shaft portion. The head portion is positioned at an outer side of the shaft portion in the axial direction. The second joint component is positioned between the head portion and the first joint component in the direction parallel to the axial direction.

In an embodiment, the connecting member further includes a spacer member. The connecting member is provided with a head portion and a rod portion extending from the head portion in the axial direction. The rod portion is inserted into the shaft portion along the axial direction and threadedly connected to the shaft portion. The head portion is positioned at an outer side of the shaft portion in the axial direction. The spacer member is positioned between the head portion and the second joint component in the direction parallel to the axial direction to space apart the connecting member from the second joint component in the direction parallel to the axial direction. The spacer member is unable to rotate relative to the connecting member around the axial direction.

In an embodiment, the spacer member is sleeved outside of the shaft portion along the direction parallel to the axial direction, and the spacer member is unable to rotate relative to the shaft portion around the axial direction.

In an embodiment, an inner peripheral surface of the spacer member is positioned adjacent to an outer surface of the shaft portion in the radial direction. A shape of a cross section of the inner peripheral surface of the spacer member taken along a direction perpendicular to the axial direction and a shape of a cross section of the outer surface of the shaft portion taken along the direction perpendicular to the axial direction are matched with each other and are non-circular.

In an embodiment, the head portion, the spacer member, the second joint component, and the first joint component abut against each other sequentially in the direction parallel to the axial direction.

In an embodiment, the second joint component is provided with a second recess that is recessed away from the head portion in the direction parallel to the axial direction. The spacer member is received in the second recess along the direction parallel to the axial direction. The second recess includes a second bottom surface. The spacer member is positioned between the head portion and the second bottom surface in the direction parallel to the axial direction.

In an embodiment, the second recess includes an inner surface positioned adjacent to and spaced apart from an outer peripheral surface of the spacer member in the radial direction.

In an embodiment, the spacer member is positioned between the head portion and the shaft portion in the direction parallel to the axial direction and abuts against each of the head portion and the shaft portion.

In an embodiment, an end portion of the shaft portion proximate to the head portion is recessed away from the head portion in the direction parallel to the axial direction to form a first recess. The spacer member is received in the first recess along the direction parallel to the axial direction. The first recess includes a first bottom surface. The spacer member is positioned between the head portion and the first bottom surface in the direction parallel to the axial direction.

In an embodiment, the first recess includes an outer surface. The inner peripheral surface of the spacer member is adjacent to the outer surface in the radial direction. The shapes of the cross sections of the inner peripheral surface of the spacer member and the outer surface taken along a direction perpendicular to the axial direction are matched with each other and are non-circular.

In an embodiment, the connecting structure further includes a spacer member. The spacer member is positioned between the connecting member and the second joint component in the direction parallel to the axial direction to space apart the connecting member from the second joint component in the direction parallel to the axial direction. The spacer member is unable to rotate relative to the connecting member around the axial direction.

In an embodiment, the spacer member is sleeved outside of the first joint component along the direction parallel to the axial direction, and the spacer member is unable to rotate relative to the first joint component around the axial direction.

In an embodiment, the inner peripheral surface of the spacer member is positioned adjacent to the outer surface of the first joint component in the radial direction. The shapes of the cross sections of the inner peripheral surface of the spacer member and the outer surface of the first joint component taken along a direction perpendicular to the axial direction are matched with each other and are non-circular.

In an embodiment, the spacer member abuts against each of the connecting member and the second joint component in the direction parallel to the axial direction. The second joint component is positioned between the connecting member and the first joint component in the direction parallel to the axial direction. The second joint component abuts against the first joint component.

In an embodiment, the spacer member is positioned between the connecting member and the first joint component in the direction parallel to the axial direction, and abuts against each of the connecting member and the first joint component.

In an embodiment, the connecting member further includes a locking member, a reset member, and an unlocking member. The locking member is disposed between the first joint component and the second joint component in the direction parallel to the axial direction, and is capable of moving between a locking position and an unlocking position along the direction parallel to the axial direction. In the locking position, the locking member prevents the first joint component and the second joint component from rotating relative to each other. In the unlocking position, the locking member allows the first joint component and the second joint component to rotate relative to each other. The reset member is disposed between the locking member and the first joint component and configured to bias the locking member toward the locking position. The unlocking member is movably connected to the second joint component, and is configured to be operable externally from the connecting structure to drive the locking member to move from the locking position to the unlocking position. The locking member is positioned between the reset member and the unlocking member in the direction parallel to the axial direction.

In an embodiment, the connecting member is exposed outside of the first joint component and the second joint component in the axial direction. The connecting member is positioned between the unlocking member and the first joint component and between the unlocking member and the second joint component in the direction parallel to the axial direction.

In an embodiment, the connecting member further includes a reinforcing member disposed inside the first joint component.

The present disclosure further provides a child carrier, including: a traveling mechanism; a lower handlebar extending upward from the traveling mechanism; an upper handlebar extending upward from the lower handlebar; and the connecting structure according to the first aspect of the present disclosure. The first joint component is fixedly connected to the lower handlebar. The second joint component is fixedly connected to the upper handlebar.

In a second aspect, the present disclosure provides a child carrying device. The child carrying device includes a folding joint and an operation assembly. The folding joint includes a mounting base, a first pivoting base, and a second pivoting base pivotably connected to each other by a first pivot shaft. The mounting base is configured to be mounted to a connecting joint of a child carrier. The first pivoting base is disposed between the mounting base and the second pivoting base. The operation assembly includes an operation member and a folding unlocking member. The folding unlocking member is pivotably connected to the folding joint via the first pivot shaft, and is operably connected to the folding joint. The operation member is a rigid structure and is pivotably connected to the folding unlocking member via a second pivot shaft. The second pivot shaft is offset from the first pivot shaft. The operation member is adapted to drive the folding unlocking member to rotate to drive the folding joint to switch from a locked state to an unlocked state, thereby allowing the first pivoting base to rotate relative to the mounting base.

In an embodiment, the operation member is provided with an operation portion adapted to be operated. The folding unlocking member has a first position. When the folding unlocking member is in the first position, the folding joint is in the locked state, and the operation portion of the operation member is positioned above a plane where the first pivot shaft is located and/or above a plane where the second pivot shaft is located.

In an embodiment, the folding unlocking member has a first position. When the folding unlocking member is in the first position, the folding joint is in the locked state, and a first angle between a plane defined collectively by the first pivot shaft and the second pivot shaft and the vertical direction is an acute angle.

In an embodiment, the folding unlocking member has a second position. When the folding unlocking member is in the second position, the folding joint is unlocked, and a second angle between a plane defined collectively by the first pivot shaft and the second pivot shaft and the vertical direction is an acute angle. The second angle is smaller than the first angle.

In an embodiment, when the folding unlocking member is rotated to the second position by the operation portion of the operation member subjected to a pulling force, a plane defined collectively by the operation portion and the second pivot shaft is parallel to a direction of the pulling force and the direction of the pulling force is vertically upward.

In an embodiment, the folding unlocking member has a second position. As the folding unlocking member rotates from the first position to the second position around the first pivot shaft, the folding unlocking member rotates relative to the second pivoting base to unlock the folding joint.

In an embodiment, under action the pulling force, the operation member drives the folding unlocking member to rotate from the second position to a third position around the first pivot shaft via the second pivot shaft. When the folding unlocking member is in the third position, the plane defined collectively by the first pivot shaft and the second pivot shaft is parallel to the direction of the pulling force and the pulling force is directed vertically upward.

In an embodiment, during the rotation of the folding unlocking member from the second position to the third position, the plane defined collectively by the operation portion of the operation member and the second pivot shaft is parallel to the direction of the pulling force.

In an embodiment, the folding unlocking member is provided with a limiting recess. The operation member is inserted into the limiting recess and pivotably connected to a wall of the limiting recess via the second pivot shaft.

In an embodiment, the wall of the limiting recess includes a first side wall and a second side wall located at two sides of the second pivot shaft, respectively. The operation member is adapted to selectively abut against the first side wall and the second side wall to limit the position of the operation member relative to the folding unlocking member.

In an embodiment, the first pivot shaft and the second pivot shaft collectively define a first plane. The second side wall is inclined to the first plane. A distance between the second side wall and the first plane decreases from a position close to an opening end of the limiting recess to a position away from the opening end of the limiting recess.

In the second aspect, the present disclosure further provides a child carrier, including: a supporting device provided with a connecting joint; and the child carrying device in the second aspect. The folding joint of the child carrying device is operably connected to the connecting joint. The folding joint is capable of unlocking the connecting joint in its unlocking process to allow the supporting device to be folded.

In a third aspect, the present disclosure provides a frame switchable between an unfolded state and a folded state, including: a first frame body, a second frame body, a rotation member, and a buffer member. The second frame body is pivotally connected to the first frame body. As the second frame body rotates relative to the first frame body in a first rotation direction, the frame switches from the unfolded state to the folded state. The rotation member is pivotally connected to the first frame body. The buffer member is connected to the rotation member. The buffer member is configured to provide a force to the rotation member for rotation relative to the first frame body in a second rotation direction opposite to the first rotation direction. During the rotation of the second frame body relative to the first frame body in the first rotation direction, the second frame body drives the rotation member to rotate relative to the first frame body in the first rotation direction.

In an embodiment, the first frame body has a first edge and a second edge. The second frame body has a third edge and a fourth edge. A first angle is formed between the first edge and the third edge. A value of the first angle when the frame is in the unfolded state is greater than a value of the first angle when the frame is in the folded state. The rotation member is positioned in an area between the first edge and the third edge. Additionally or alternatively, during the rotation of the second frame body relative to the first frame body in the first rotation direction, the rotation member abuts against the third edge of the second frame body.

In an embodiment, there is a gap at a pivot position between the first frame body and the second frame body, and the gap is shielded by the rotation member.

In an embodiment, the buffer member is a resilient member. Alternatively, the buffer member is a torsion spring, the rotation member has an accommodation groove, one of two torsion arms of the buffer member is connected to the first frame body, and the other one of the two torsion arms is positioned in the accommodation groove.

In an embodiment, the first frame body includes a first main frame body and a first connecting base connected to each other and arranged at an angle. The second frame body includes a second main frame body and a second connecting base connected to each other. The first connecting base is pivotably connected to the second connecting base.

In an embodiment, when the frame is in the unfolded state, the rotation member abuts against an edge of the first connecting base facing the rotation member or an edge of the second connecting base facing the rotation member.

In an embodiment, during switching of the frame from the unfolded state to the folded state, the edge of the second connecting base facing the rotation member pushes the rotation member to rotate relative to the first frame body in the first rotation direction.

In an embodiment, the first connecting base includes a first base body and a second base body spaced apart from each other. The first connecting base has a cavity and an opening in communication with each other. The cavity is defined between the first base body and the second base body. At least a part of the second connecting base is embedded into the cavity. The opening is disposed opposite to the rotation member. The third edge of the second frame body is exposed through the opening. During switching of the frame from the unfolded state to the folded state, the third edge protrudes out of the opening and pushes the rotation member to rotate relative to the first frame body in the first rotation direction.

In an embodiment, the rotation member has a width greater than a distance between the first frame body and the second frame body, and at least a part of the opening is shielded by the rotation member.

In an embodiment, the frame further includes a first pivot shaft. The first connecting base is pivotably connected to the second connecting base via he first pivot shaft. The first connecting base has a first portion from a connection position between the first connecting base and the first main frame body to the first pivot shaft, and a second portion from the first pivot shaft to an end of the first connecting base. When the frame is in the unfolded state, an area of the opening corresponding to the first portion is shielded by the rotation member.

In an embodiment, the first connecting base further includes a connecting portion connecting the first base body to the second base body, and the cavity is enclosed by the connecting portion, the first base body, and the second base body.

In an embodiment, the first frame body is a handlebar frame, and the second frame body is a rear leg frame. The frame further includes a front leg frame pivotally connected to the handlebar frame.

### BRIEF DESCRIPTION OF THE DRAWINGS

FIG. 1 is a perspective view of a stroller provided according to a first embodiment of the present disclosure;
FIG. 2A and FIG. 2B are partially enlarged views of the boxes at the left side and the right side of FIG. 1, respectively;
FIG. 3A and FIG. 3B are exploded perspective views corresponding to FIG. 2A and FIG. 2B, respectively;
FIG. 4 is a perspective view of a connecting structure according to the first embodiment of the present disclosure, with the unlocking member removed;
FIG. 5 is a perspective view of the connecting structure according to the first embodiment of the present disclosure, with the unlocking member, the connecting member, and the spacer member removed;
FIG. 6 is a perspective view of the connecting structure according to the first embodiment of the present disclosure, with the unlocking member and the connecting member removed;
FIG. 7 is a perspective view of the connecting structure according to the first embodiment of the present disclosure, with the unlocking member, the second joint component, and the spacer member removed;
FIG. 8 is a side cross-sectional view of the connecting structure according to the first embodiment of the present disclosure;
FIG. 9 is a partially enlarged view of the box at the spacer member of FIG. 8;
FIG. 10 is a schematic perspective view of a child carrier provided according to a second embodiment of the present disclosure, with a child carrying device in the folded state, a supporting device in the unfolded state, and a folding joint in the locked state;
FIG. 11 is a schematic cross-sectional view of the child carrier taken along the U1-U1 line of FIG. 10, with the child carrying device in the folded state, the supporting device in the unfolded state, and the folding joint in the locked state;
FIG. 12 is a schematic cross-sectional view of the child carrier taken along the U1-U1 line of FIG. 10, with the child carrying device in the folded state, the supporting device in the unfolded state, and the folding joint in the unlocked state;
FIG. 13 is a schematic cross-sectional view of the child carrier taken along the U1-U1 line of FIG. 10, with both the child carrying device and the supporting device in the folded state and the folding joint in the unlocked state;
FIG. 14 is a schematic cross-sectional view of the child carrier taken along the U1-U1 line of FIG. 10, with both the child carrying device and the supporting device in the folded state and the folding joint in the unlocked state;
FIG. 15 is a schematic cross-sectional view of the child carrier taken along the U2-U2 line of FIG. 11, with a folding locking member in the locking position;
FIG. 16 is a schematic cross-sectional view of the child carrier taken along the U3-U3 line of FIG. 12, with a folding locking member in the unlocking position;
FIG. 17 is a schematic perspective view of the child carrying device of FIG. 10, with the folding locking member in the unlocking position;
FIG. 18 is a schematic partial sectional view of the child carrying device taken along the U4-U4 line of FIG. 17, with the folding locking member in the locking position;
FIG. 19 is a schematic partial exploded view of the folding joint of the child carrying device of FIG. 18 in one direction;
FIG. 20 is a schematic partial exploded view of the folding joint of the child carrying device of FIG. 18 in another direction;
FIG. 21 is a schematic partial exploded view of the connecting joint of the child carrying device of FIG. 18 in one direction;
FIG. 22 is a schematic partial exploded view of the connecting joint of the child carrying device of FIG. 18 in another direction;
FIG. 23 is a schematic perspective view of a frame in the unfolded state according to a third embodiment of the present disclosure;
FIG. 24 is a partial exploded view of the frame in the unfolded state according to the third embodiment of the present disclosure;
FIG. 25 is a cross-sectional view of the frame in the unfolded state according to the third embodiment of the present disclosure;
FIG. 26 is a cross-sectional view of the frame at a time point during the folding process according to the third embodiment of the present disclosure;
FIG. 27 is a side view of the frame in the folded state according to the third embodiment of the present disclosure;
FIG. 28 is a cross-sectional view of the frame in the folded state according to the third embodiment of the present disclosure.

### DETAILED DESCRIPTION

In the description of the present disclosure, it is to be understood that the orientation and position relationships indicated by the technical terms such as "central", "longitudinal", "transverse", "length", "width", "thickness", "upper", "lower", "front", "rear", "left", "right", "vertical", "horizontal", "top", "bottom", "inner", "outer", "clockwise ", "anticlockwise ", "axial", "radial", "circumferential", etc., are based on the orientation or position relationship as shown in the accompanying drawings, it is only for the convenience of describing the embodiments of the present disclosure and simplifying the description, rather than indicating or implying that the device or element referred to thereby must have a specific orientation and be constructed and operated in a specific orientation, and thus it cannot be understood as limitations on the embodiments of the present disclosure.

In addition, terms such as "first" and "second" are used herein for purposes of description and are not intended to indicate or imply relative importance or significance or to imply the number of indicated technical features. Thus, features limited by "first" and "second" are intended to indicate or imply including one or more than one of these features. Further, in the description of the present disclosure, "a plurality of" means two or more than two, unless specified otherwise.

It is to be understood that when an element is referred to as being "fixed" or "disposed" on another element, it can be directly on the other element or intervening elements may be present. When an element is referred to as being "connected" to another element, it can be directly connected to the other element or intervening elements may be present.

### First embodiment

A stroller typically includes a traveling mechanism, such as a wheel, and a handlebar positioned above the traveling mechanism. The user pushes the handlebar to move the stroller. Many strollers currently available on the market include a folding mechanism or height adjustment mechanism for the handlebar, wherein the rod portions of the handlebar are connected by two or more joints that are rotatable relative to each other.

A significant issue arises when using a bolt and a nut to connect these joints of the handlebar. In this configuration, the bolt passes through all the joints simultaneously, with both ends thereof exposed out of the joints, wherein one end of the bolt presses against one of the joints, while the other end of the bolt is threadedly connected to the nut to connect the joints together. However, when the joints rotate relative to each other, they also rotate relative to the bolt and tends to apply a rotational torque to the bolt, which may lead to gradual loosening of the bolt and the nut.

Therefore, there is a need to provide a new connecting structure that prevents the joints from applying a rotational torque to the bolt during their relative rotation. It is also desirable that the connecting structure provides a neat appearance, particularly by concealing the bolt and the nut. Additionally, it is also desirable for the connecting structure to incorporate a locking device in a compact manner to lock or unlock the relative rotation between the joints.

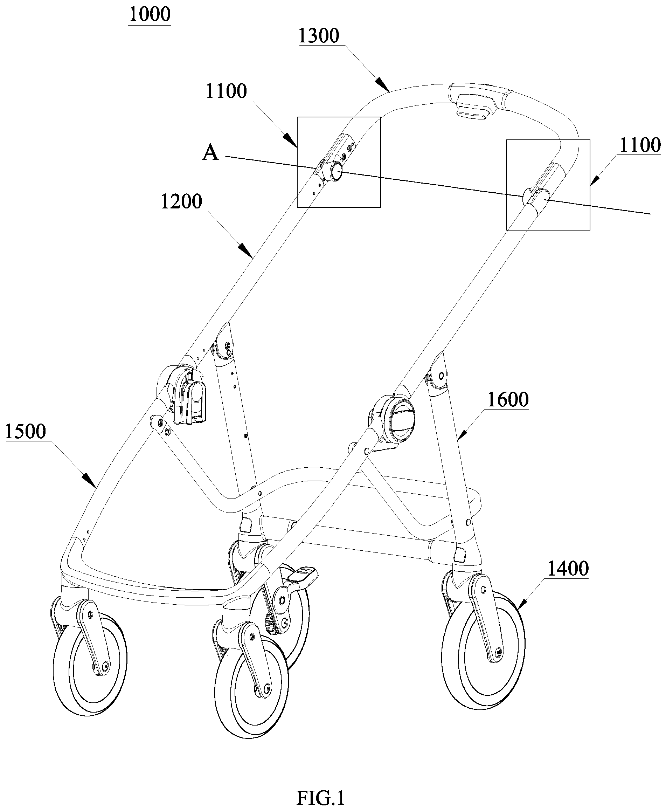

To address the above issues, the first embodiment of the present disclosure provides a connecting structure and a stroller including the same, as shown in FIG. 1 to FIG. 9.

The stroller 1000 according to the first embodiment of the present disclosure will be generally described with reference to FIG. 1. The stroller 1000 includes a traveling mechanism 1400, a lower handlebar 1200, an upper handlebar 1300, a connecting structure 1100, a front leg 1500, and a rear leg 1600. The traveling mechanism 1400 includes, for example, a wheel, which is disposed at the bottom of the stroller 1000. The front leg 1500 and the rear leg 1600 each extend upward from the traveling mechanism 1400. The lower handlebar 1200 may be connected to the traveling mechanism 1400 via the rear leg 1600, but the present disclosure is not limited thereto. The upper handlebar 1300 extends upward from the lower handlebar 1200. The connecting structure 1100 is connected between the upper handlebar 1300 and the lower handlebar 1200 such that the upper handlebar 1300 and the lower handlebar 1200 are capable of rotating relative to each other around a transverse axial direction A. In other embodiments, the connecting structure 1100 may be provided between the lower handlebar 1200 and the front leg 1500, between the lower handlebar 1200 and the rear leg 1600, or between the front leg 1500 and the rear leg 1600 of the stroller 1000.

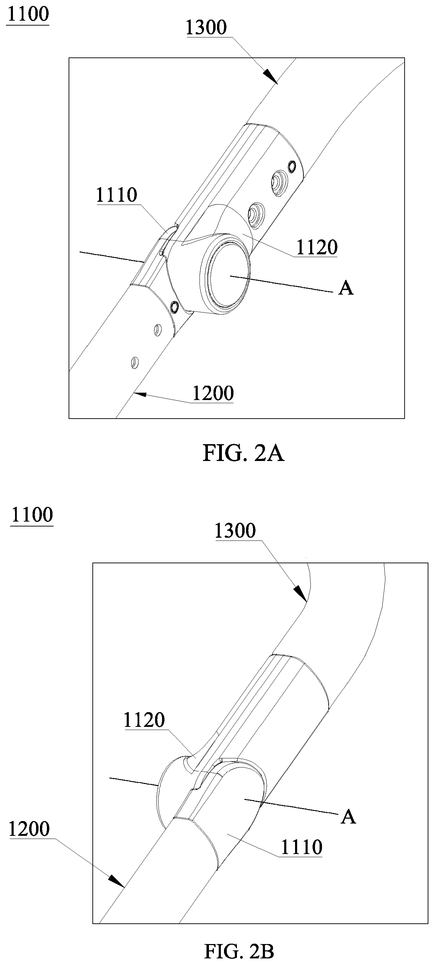

Referring to FIG. 2A and FIG. 2B, the connecting structure 1100 according to the first embodiment of the present disclosure includes a first joint component 1110 and a second joint component 1120. The first joint component 1110 is fixedly connected to the lower handlebar 1200, the second joint component 1120 is fixedly connected to the upper handlebar 1300, and the first joint component 1110 and the second joint component 1120 are capable of rotating relative to each other around the axial direction A. As such, the relative rotation between the upper handlebar 1300 and the lower handlebar 1200 are achieved via the connecting structure 1100.

In the first embodiment of the present disclosure, two lower handlebars 1200 parallel to each other may be provided. The upper handlebar 1300 may be substantially U-shaped. The two ends of the upper handlebar 1300 are rotatably connected to the two lower handlebars 1200 by two connecting structures 1100, respectively. The two connecting structures 1100 are disposed mirror-symmetrically opposite to one another along the axial direction A.

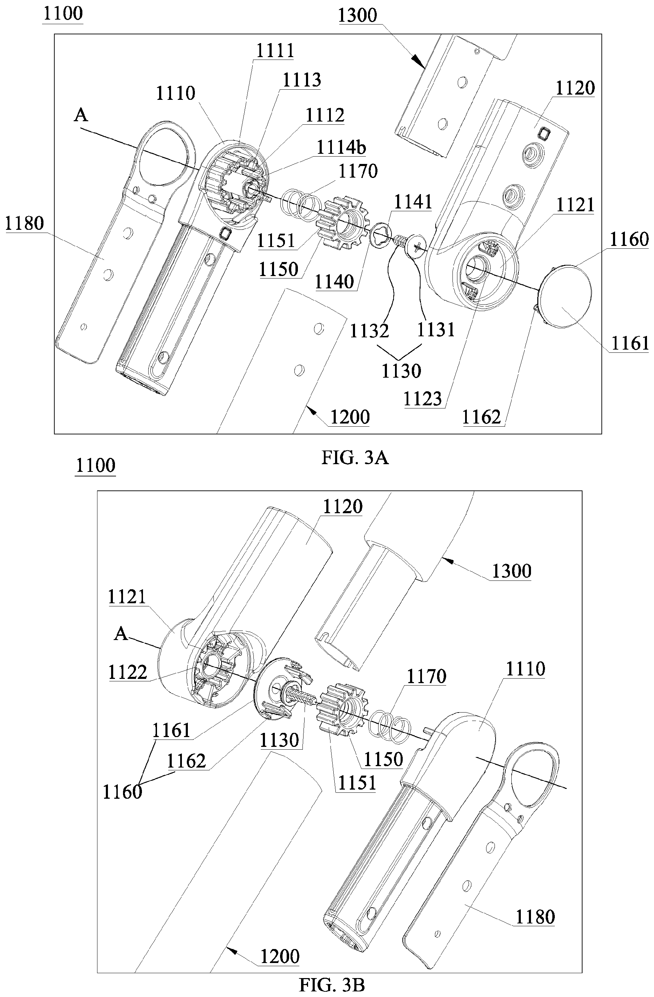

The connecting structure 1100 according to the first embodiment of the present disclosure will be described in detail with reference to FIG. 3A and FIG. 3B. The connecting structure 1100 includes a first joint component 1110, a second joint component 1120, a connecting member 1130 (e.g., a screw, with the end of the screw provided with a groove), a spacer member 1140, a locking member 1150, an unlocking member 1160, a reset member 1170, and a reinforcing member 1180.

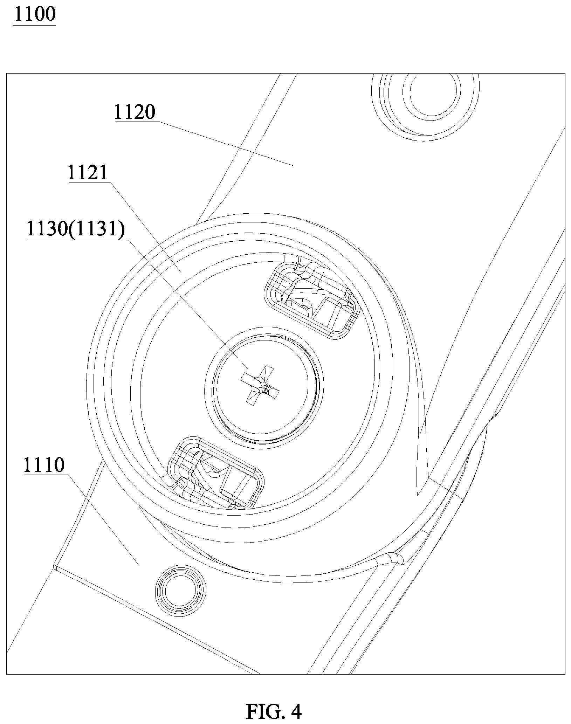

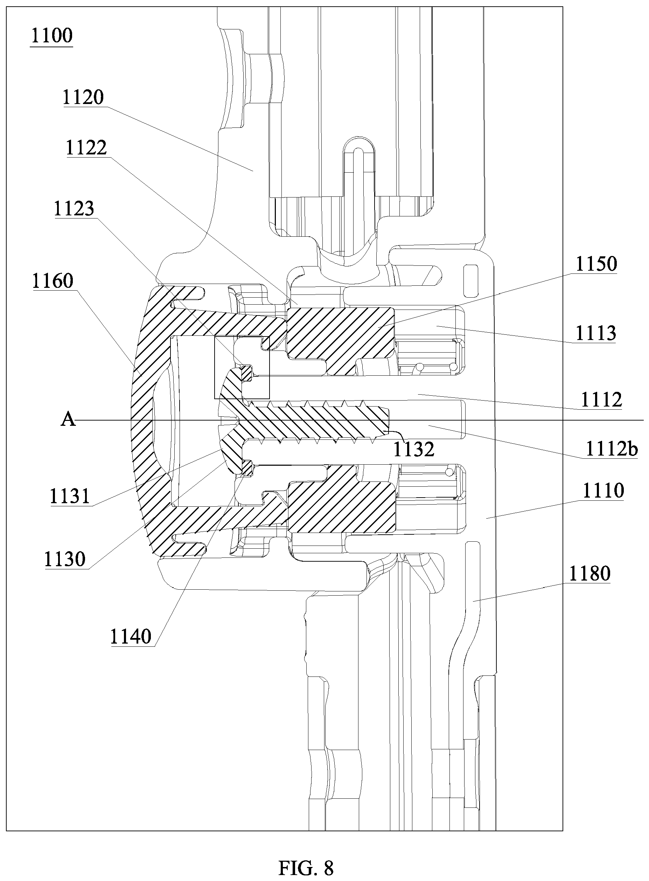

The connecting structure 1100 according to the first embodiment of the present disclosure will be further described with reference to FIG. 3A and FIG. 8. In general, the first joint component 1110 includes a first disk-shaped portion 1111. The second joint component 1120 includes a second disk-shaped portion 1121. The first disk-shaped portion 1111 and the second disk-shaped portion 1121 are connected to each other and are rotatable relative to each other around the axial direction A. The connecting member 1130 extends through the second joint component 1120 along the axial direction A to be screwedly connected (specifically threaded) to the first joint component 1110, such that the connecting member 1130 is fixed relative to the first joint component 1110. The connecting member 1130 does not extends through the first joint component 1110 along the axial direction A, with only one end of the connecting member 1130 in the axial direction A exposed outside of the first joint component 1110. At least a part of the second joint component 1120 is positioned between the connecting member 1130 and the first joint component 1110 in a direction parallel to the axial direction A, such that the second joint component 1120 is restrained between the connecting member 1130 and the first joint component 1110 in the direction parallel to the axial direction A, thereby preventing the separation of the first joint component 1110 from the second joint component 1120 in the axial direction A. The end of the connecting member 1130 exposed outside of the first joint component 1110 is also exposed outside of the second joint component 1120 (specifically see FIG. 4).

During the rotation of the second disk-shape portion 1121 relative to the first disk-shaped portion 1111, the second disk-shaped portion 1121 may apply a rotational torque to the connecting member 1130 threadedly connected to the first disk-shaped portion 1111, causing the connecting member 1130 to rotate relative to the first disk-shaped portion 1111, which may in turn cause the separation of the connecting member 1130 from the first disk-shaped portion 1111. To avoid this, the second disk-shaped portion 1121 of the present disclosure is spaced apart from the connecting member 1130, so that the application of the rotational torque from the second disk-shaped portion 1121 to the connecting member 1130 is avoided while retaining the basic function of the connecting member 1130 of restricting the separation of the first joint component 1110 from the second joint component 1120 in the axial A direction.

The connecting structure 1100 according to the first embodiment of the present disclosure will be further described with reference to FIG. 3A, FIG. 5, and FIG. 8.

The first disk-shaped portion 1111 includes a shaft portion 1112 extending toward the second joint component 1120 in the direction parallel to the axial direction A. The shaft portion 1112 extends from the center of the first disk-shaped portion 1111 and through the center of the second disk-shaped portion 1121 in the direction parallel to the axial direction A to be exposed outside of the second disk-shaped portion 1121. That is, the second joint component 1120 is sleeved outside of the shaft portion 1112 such that the second disk-shaped portion 1121 can rotate relative to the first disk-shaped portion 1111 around the shaft portion 1112.

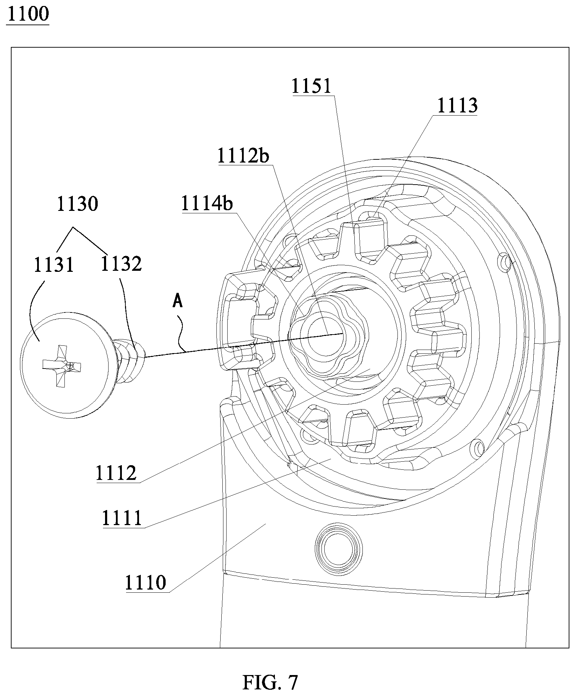

The connecting structure 1100 according to the first embodiment of the present disclosure will be further described with reference to FIG. 7 and FIG. 8.

The connecting member 1130 is inserted into the shaft portion 1112 from the side of the second disk-shaped portion 1121 facing away from the first joint component 1110 (i.e., the right side in FIG. 3A) along the axial direction A, and threadedly connected to the shaft portion 1112, but does not extend through the shaft portion 1112 along the axial direction A. It should be appreciated that in this case, the connecting member 1130 extends through the second disk-shaped portion 1121, and the shaft portion 1112 is positioned between the connecting member 1130 and the second joint component 1120 in a radial direction perpendicular to the axial direction A to space apart the connecting member 1130 from the second joint component 1120 in the radial direction. As such, the application of the rotational torque from the second joint component 1120 to the connecting member 1130 in the radial direction during the rotation of the second joint component 1120 relative to the first joint component 1110 can be avoided.

Specifically, the shaft portion 1112 is provided with a shaft hole 1112b therein for connecting with the connecting member 1130. For example, the shaft hole 1112b may be provided with a female thread, and the connecting member 1130 may be provided with a male thread, such that the connecting member 1130 can be threadedly fixed into the shaft hole 1112b.

Specifically, the connecting member 1130 includes a head portion 1131 and a rod portion 1132. The rod portion 1132 is inserted into the shaft portion 1112 along the axial direction A and threadedly connected to the shaft portion 1112, such that the connecting member 1130 is connected to the first joint component 1110. The head portion 1131 is positioned at an outer side of the shaft portion 1112 in the axial direction A, and at least a part of the second joint component 1120 is positioned between the head portion 1131 and the first joint component 1110 in the direction parallel to the axial direction A, such that the second joint component 1120 is restricted between the connecting member 1130 and the first joint component 1110 in the direction parallel to the axial direction A, thereby preventing the separation of the first joint component 1110 from the second joint component 1120 along the axial direction A. Additionally, the head portion 1131 of the connecting member 1130 is exposed outside of the first joint component 1110 and the second joint component 1120 in the axial direction A (see FIG. 4).

When at least a part of the second joint component 1120 is positioned between the head portion 1131 and the first joint component 1110 in the direction parallel to the axial direction A, the at least a part of the second joint component 1120 is positioned opposite to the head portion 1131 in the direction parallel to the axial direction A. To avoid the abutment of the connecting member 1130 against the second joint component 1120 in the direction parallel to the axial direction A, the head portion 1131 is spaced apart from the second joint component 1120 in the direction parallel to the axial direction A. Specifically, in the present disclosure, the spacer member 1140 is disposed between the at least a part of the second joint component 1120 and the head portion 1131 in the direction parallel to the axial direction A (see FIG. 8) such that the second joint component 1120 is spaced apart from the connecting member 1130 (specifically, the head portion 1131), and the spacer member 1140 is unable to rotate relative to the connecting member 1130 around the axial direction A.

The connecting structure 1100 according to the first embodiment of the present disclosure will be further described with reference to FIG. 8. Since the at least a part of the second joint component 1120 is positioned between the spacer member 1140 and the first joint component 1110 in the direction parallel to the axial direction A, it should be appreciated that the head portion 1131, the spacer member 1140, the at least a part of the second joint component 1120, and at least a part of the first joint component 1110 are arranged sequentially in the direction parallel to the axial direction A to prevent the separation of the second joint component 1120 from the first joint component 1110 in the direction parallel to the axial direction A.

In other embodiments, the connecting member 1130 may be in other forms, such as a bolt (which does not need to be connected to a nut, but is only threadedly connected to the first joint component 1110, with no groove on the end thereof), as long as the separation of the second joint component 1120 from the first joint component 1110 in the axial direction A can be prevented.

In the first embodiment of the present disclosure, the spacer member 1140 is unable to rotate relative to the connecting member 1130 around the axial direction A, specifically relative to the first joint component 1110, and the first joint component 1110 is fixed relative to the connecting member 1130.

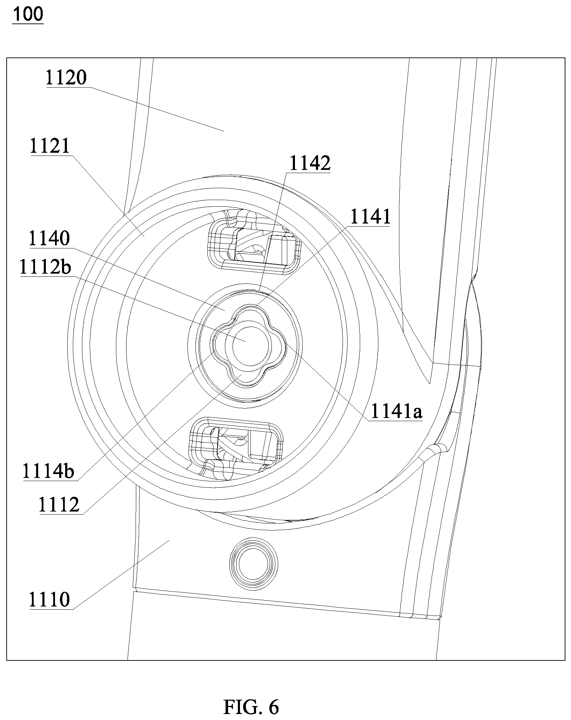

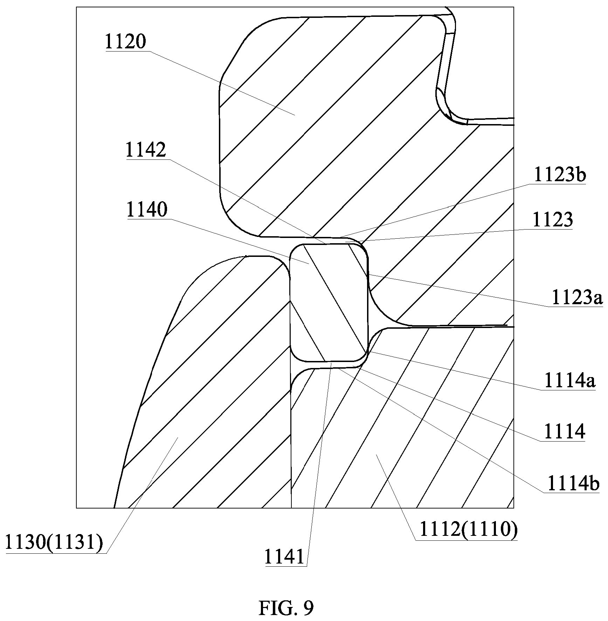

It should be appreciated from the above that the head portion 1131, the spacer member 1140, the second joint component 1120, and the first joint component 1110 are arranged sequentially in the direction parallel to the axial direction A. That is, the second joint component 1120 is arranged adjacent to the spacer member 1140, so that during the rotation of the second joint component 1120 relative to the first joint component 1110, the second joint component 1120 may apply a rotational torque to the spacer member 1140. To prevent the second joint component 1120 from applying a rotational torque to the spacer member 1140 and then applying a rotational torque to the head portion 1131 via the spacer member 1140, in the present disclosure, the spacer member 1140 is sleeved onto a radially outer side of the first joint component 1110, as shown in FIG. 6 and FIG. 8. Specifically, the spacer member 1140 is sleeved onto a radially outer side of the shaft portion 1112 of the first joint component 1110, and the spacer member 1140 is unable to relative to the shaft portion 1112 around the axial direction A. Referring to FIG. 9, the spacer member 1140 has an outer peripheral surface 1142 and an inner peripheral surface 1141. The inner peripheral surface 1141 of the spacer member 1140 is positioned at an outer side of the outer surface 1114b of the shaft portion 1112 of the first joint component 1110. The shapes of the cross sections of the inner peripheral surface 1141 and the outer surface 1114b taken along a direction perpendicular to the axial direction A are matched with each other (e.g., substantially the same ) and are non-circular, so as to prevent the rotation of the inner peripheral surface 1141 relative to the outer surface 1114b around the axial direction A. Referring to FIG. 9, in this case, the inner peripheral surface 1141 and the outer surface 1114b may not fully abut against each other in the radial direction.

Referring to FIG. 8, to ensure that the spacer member 1140 and the second joint component 1120 will not move between the head portion 1131 and the first joint component 1110 in the direction parallel to the axial direction A, the head portion 1131, the spacer member 1140, the second joint component 1120, and the first joint component 1110 sequentially abut against each other in the direction parallel to the axial direction A. In other embodiments, the spacer member 1140 may not abut against the head portion 1131 in the direction parallel to the axial direction A, or the second joint component 1120 may not abut against the first joint component 1110 in the direction parallel to the axial direction A, so that the spacer member 1140 and the second joint component 1120 may sway slightly between the head portion 1131 and the first joint component 1110.

In order to enable the spacer member 1140 to be more stably positioned between the head portion 1131 and the second joint component 1120 in the direction parallel to the axial direction A, referring to FIG. 8, the spacer member 1140 abuts against each of the head portion 1131 and at least a part of the first joint component 1110 in the direction parallel to the axial direction A to further fix the position of the spacer member 1140 in the direction parallel to the axial direction A. In other embodiments, the second joint component 1120 may not abut against the spacer member 1140 or the first joint component 1110, so that the second joint component 1120 may sway slightly between the spacer member 1140 and the first joint component 1110 in the direction parallel to the axial direction A.

In other embodiments, the shapes of the cross sections of the inner peripheral surface 1141 and the outer surface 1114b taken along a direction perpendicular to the axial direction A may be matched with each other and be circular, and the rotation of the spacer member 1140 relative to the shaft portion 1112 around the axial direction A may be restricted by the friction force between the inner peripheral surface 1141 and the outer surface 1114b.

The connection relationship between the spacer member 1140 and the connecting member 1130, the first joint component 1110, and the second joint component 1120 will be described in detail in the below.

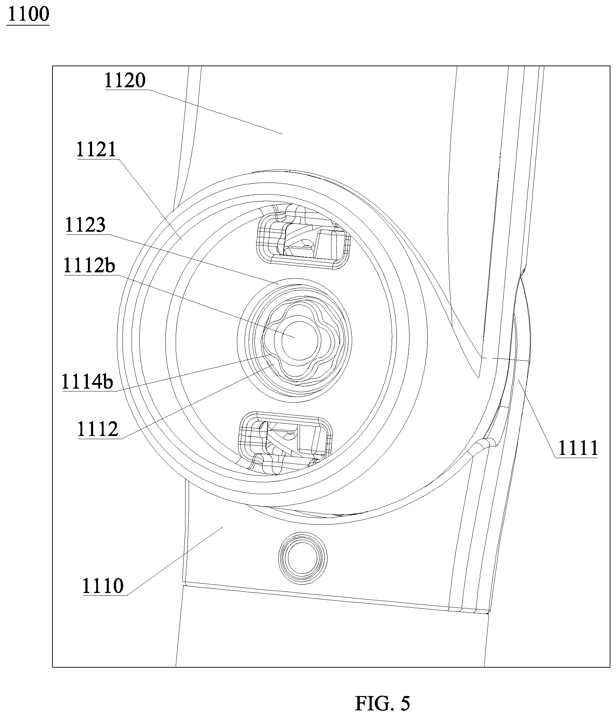

Referring to FIG. 5, FIG. 6, FIG. 8, and FIG. 9, an end portion of the shaft portion 1112 proximate to the head portion 1131 is recessed away from the head portion 1131 in the direction parallel to the axial direction A to form a first recess 1114 around the axial direction A located at an outer periphery of the shaft portion 1112. The spacer member 1140 is received in the first recess 1114 along the direction parallel to the axial direction A. The first recess 1114 includes a first bottom surface 1114a and an outer surface 1114b (the outer surface 1114b of the first recess 1114 is a part of the outer surface of the shaft portion 1112). The extending direction of the first bottom surface 1114a is perpendicular to the axial direction A. The outer surface 1114b is disposed around the axial direction A and extends along the direction parallel to the axial direction A. The spacer member 1140 is positioned between the head portion 1131 and the first bottom surface 1114a in the direction parallel to the axial direction A, and abuts against each of the head portion 1131 and the first bottom surface 1114a, such that the spacer member 1140 is sandwiched between the head portion 1131 and the first joint component 1110 in the direction parallel to the axial direction A. The outer diameter of the spacer member 1140 (i.e., the diameter of the outer peripheral surface 1142) is larger than the outer diameter of the head portion 1131 of the connecting member 1130, so that the portion of the spacer member 1140 extending beyond the outer diameter of the head portion 1131 in the radial direction can be used to abut against the second joint component 1120 in the direction parallel to the axial direction A.

Referring to FIG. 5 and FIG. 6, the cross sections of the inner peripheral surface 1141 and the outer surface 1114b taken along a direction perpendicular to the axial direction A each include four arcs 1141a protruded outwardly that are arranged along the circumferential direction to restrict the rotation of the spacer member 1140 relative to the first joint component 1110 around the axial direction A. In other embodiments, the cross sections of the inner peripheral surface 1141 and the outer surface 1114b taken along a direction perpendicular to the axial direction A may have a square shape, a hexagonal shape, a keyway shape, or other shapes, as long as the rotation of the spacer member 1140 relative to the first joint component 1110 around the axial direction A can be prevented.

Referring to FIG. 5, FIG. 6, FIG. 8, and FIG. 9, the second joint component 1120 is provided with a second recess 1123 that is recessed away from the head portion 1131 in the direction parallel to the axial direction A. The second recess 1123 is arranged surrounding the shaft portion 1112 and is located at a radially inner side of the second joint component 1120. The spacer member 1140 is received in the second recess 1123 along the direction parallel to the axial direction A. The second recess 1123 includes a second bottom surface 1123a and an inner surface 1123b. The extending direction of the second bottom surface 1123a is perpendicular to the axial direction A. The inner surface 1123b is arranged around the axial direction A and extends along the direction parallel to the axial direction A. The spacer member 1140 is positioned between the head portion 1131 and the second bottom surface 1123a in the direction parallel to the axial direction A and abuts against each of the head portion 1131 and the second bottom surface 1123a, such that the spacer member 1140 is sandwiched between the head portion 1131 and the second joint component 1120 in the direction parallel to the axial direction A.

Referring to FIG. 6, FIG. 8, and FIG. 9, the spacer member 1140 is also positioned between the inner surface 1123b and the outer surface 1114b in the radial direction, and there is a gap between the inner surface 1123b and the outer peripheral surface 1142 of the spacer member 1140 in the radial direction, so that the second joint component 1120 can rotate relative to the spacer member 1140 around the axial direction A without applying a rotational torque to spacer member 1140. Specifically, at least one of the cross sections of the inner surface 1123b and the outer peripheral surface 1142 taken along a direction perpendicular to the axial direction A has a circular shape. In this embodiment, both the cross sections of the inner surface 1123b and the outer peripheral surface 1142 taken along a direction perpendicular to the axial direction A have a circular shape.

Referring to FIG. 6, FIG. 8, and FIG. 9, a part of the head portion 1131 is disposed opposite to the inner surface 1123b of the second joint component 1120 in the radial direction. However, due to the gap between the head portion 1131 and the inner surface 1123b, the transfer of the rotational torque from the second joint component 1120 to the connecting member 1130 can be effectively prevented.

In other embodiments, the second joint component 1120 may not be provided with the second recess 1123, but the spacer member 1140 directly abuts against the surface of the second joint component 1120 in the direction parallel to the axial direction A. Moreover, it is not necessary to make the second joint component 1120 opposite to the spacer member 1140 in the radial direction, i.e., it is not necessary to provide the inner surface 1123b, and thus there is no case in which the inner surface 1123b is disposed opposite to head portion 1131 in the radial direction.

In other embodiments, in order to ensure that the spacer member 1140 is unable to rotate relative to the first joint component 1110, the spacer member 1140 may be fixed directly to the first joint component 1110, or the spacer member 1140 and the first joint component 1110 may be integrally formed.

The first joint component 1110, the second joint component 1120, the spacer member 1140, and the connecting member 1130 are assembled as follows:

Firstly, the second joint component 1120 is sleeved outside of the shaft portion 1112 along the direction parallel to the axial direction A to position the second recess 1123 radially outward of the first recess 1114, and to position the second bottom surface 1123a of the second recess 1123 flush with the first bottom surface 1114a of the first recess 1114.

Secondly, the spacer member 1140 is received in the first recess 1114 and the second recess 1123 along the direction parallel to the axial direction A, such that the spacer member 1140 abuts against the first bottom surface 1114a and the second bottom surface 1123a in the direction parallel to the axial direction A, and the spacer member 1140 is positioned between the outer surface 1114b of the shaft portion 1112 and the inner surface 1123b of the second joint component 1120 in the radial direction.

Finally, the rod portion 1132 of the connecting member 1130 is inserted into the shaft portion 1112 along the axial direction A and threadedly connected to the shaft portion 1112, and the head portion 1131 is caused to abut against the spacer member 1140 in the direction parallel to the axial direction A.

The connecting structure 1100 according to the first embodiment of the present disclosure will be further described with reference to FIG. 3A, FIG. 3B, and FIG. 8. The locking member 1150 is disposed between the first joint component 1110 and the second joint component 1120 in the direction parallel to the axial direction A, and is capable moving between a locking position and an unlocking position along the direction parallel to the axial direction A. In the locking position, the locking member 1150 prevents the first joint component 1110 and the second joint component 1120 from rotating relative to each other. In the unlocking position, the locking member 1150 allows the first joint component 1110 and the second joint component 1120 to rotate relative to each other. The reset member 1170 biases the locking member 1150 toward the locking position. The unlocking member 1160 is provided to be operable externally from the connecting structure 1100 to move the locking member 1150 to the unlocking position.

Specifically, the locking member 1150 has an annular shape and includes a plurality of locking portions 1151 protruded radially outwardly. The locking member 1150 is sleeved outside of the shaft portion 1112 of the first joint component 1110. The locking portions 1151 are insertable into guide grooves 1113 around the shaft portion 1112 of the first joint component 1110. More specifically, the locking portions 1151 are in form of toothed protrusions distributed along the outer periphery of the locking member 1150, such that the locking member 1150 is overall gear-shaped. The guide grooves 1113 are in form of axial grooves corresponding to the locking portions 1151 to guide the movement of the locking member 1150 along the direction parallel to the axial direction A. The locking position of the locking member 1150 is a position where the locking member 1150 is engaged with the second joint component 1120 in the direction parallel to the axial direction A. The unlocking position of the locking member 1150 is a position where the locking member 1150 is disengaged from the second joint component 1120 in the direction parallel to the axial direction A. It should be understood that the locking member 1150 always remains engaged with the guide grooves 1113 of the first joint component 1110 and is unable to rotate relative to the first joint component 1110.

The reset member 1170 is a compression spring in this embodiment and is provided between the first disk-shaped portion 1111 of the first joint component 1110 and the locking member 1150, thus biasing the locking member 1150 toward the second joint component 1120. Specifically, the reset member 1170 is sleeved outside of the shaft portion 1112. In other embodiments, the reset member 1170 may be a component made of an elastomeric material or the like, as long as it can apply a biasing force to the locking member 1150.

The second disk-shaped portion 1121 of the second joint component 1120 is provided with a plurality of locking grooves 1122 distributed circumferentially. When the locking member 1150 is in the locking position, the locking portions 1151 is engaged with the respective locking grooves 1122 of the second joint component 1120. Since the locking member 1150 is unable to rotate relative to the first joint component 1110, the relative rotation between the first joint component 1110 and the second joint component 1120 is locked when the locking portions 1151 of the locking member 1150 engage into the respective locking grooves 1122 of the second joint component 1120. Since the locking portions 1151 are evenly distributed circumferentially and the locking grooves 1122 are correspondingly distributed circumferentially, the locking member 1150 is capable of locking the second joint component 1120 at different rotation angles.

The unlocking member 1160 is provided at an outer side of the first joint component 1110 and the second joint component 1120 in the axial direction Ato cover the connecting member 1130, specifically to cover the head portion 1131. An outer side of the unlocking member 1160 (i.e., a side of the unlocking member 1160 facing away from the locking member 1150) has a decorative surface 1161 to provide the connecting structure 1100 a neat and tidy appearance. The locking member 1150 is positioned between the reset member 1170 and the unlocking member 1160 in the direction parallel to the axial direction A and is movably connected to the second joint component 1120. Specifically, the unlocking member 1160 extends through the second joint component 1120 to abut against the locking member 1150, such that the unlocking member 1160 can be pressed inwardly (i.e., pressed toward the locking member 1150) in the direction parallel to the axial direction A to drive the locking member 1150 to move to the unlocking position. For example, the unlocking member 1160 is provided with at least one pressing portion 1162 extending toward the locking member 1150. The pressing portion 1162 extends through the second joint component 1120 and moves relative to the second joint component 1120 in the direction parallel to the axial direction A to abut against the locking member 1150. The pressing portion 1162 is provided with a barb to prevent the detachment of the pressing portion 1162 from the second joint component 1120 when the pressing portion 1162 is subjected to the resilient force of the reset member 1170. As such, the user can easily operate the locking member 1150 via the unlocking member 1160.

In this embodiment, the specific structures of the locking member 1150, the unlocking member 1160, and the reset member 1170 advantageously utilize the space between the first joint component 1110 and the second joint component 1120, and do not conflict with the connecting member 1130, the spacer member 1140, and the shaft portion 1112. It should be understood, however, that the locking member 1150, the unlocking member 1160, and the reset member 1170 may be provided in other forms known in the art.

Considering that the connecting member 1130 is provided in the first joint component 1110 and the connecting member 1130 is used to prevent the detachment of the second joint component 1120 from the first joint component 1110 along the axial direction A, the reinforcing member 1180 is provided inside the first joint component 1110 to reinforce the first joint component 1110. For example, the first joint component 1110 is made of plastic and the reinforcing member 1180 is made of metal, thereby reducing the overall weight of the connecting structure 1100 while ensuring the necessary strength. In other embodiments, the reinforcing member 1180 may be provided at the outer side of the first joint component 1110 (i.e., the side of the first joint component 1110 facing away from the second joint component 1120).

The connecting structure 1100 according to the first embodiment of the present disclosure will be further described with reference to FIG. 7.

FIG. 7 clearly illustrates the first disk-shaped portion 1111, the shaft portion 1112, and the guiding grooves 1113 of the first joint component 1110. As previously described, the locking member 1150 moves between the locking position and the unlocking position relative to the first joint component 1110 along the direction parallel to the axial direction A, and always remains engaged with the guiding grooves 1113.

The connecting structure 1100 according to the first embodiment of the present disclosure will be further described with reference to FIG. 8.

FIG. 8 illustrates the locking member 1150 in the locking position, where the locking member 1150 is partially within the guiding grooves 1113 of the first joint component 1110 and partially within the locking grooves 1122 of the second joint component 1120, so that the relative rotation between the first joint component 1110 and the second joint component 1120 is locked. The user may press the locking member 1150 via the unlocking member 1160 to move the locking member 1150 toward the unlocking position (i.e., toward the right side of FIG. 8) and out of the locking grooves 1122 of the second joint component 1120, thereby allowing the relative rotation between the first joint component 1110 and the second joint component 1120.

In summary, the first embodiment of the present disclosure provides a connecting structure having an anti-loosening structure. Specifically, the connecting member connects the second joint component to the first joint component along the axial direction, but there is no direct contact between the connecting member and the second joint component in both the axial and radial directions, avoiding the contact between the connecting member and the second joint component which may transfer a rotational torque from the second joint component to the connecting member and thus cause the detachment of first joint component from the second joint component along the axial direction. It should be understood that although the connecting structure of the present disclosure is described in connection with a stroller, the connecting structure may be applied to other devices.

### Second embodiment

A foldable stroller is typically equipped with connecting joints on both the left and right sides. The connecting joints at the left and right sides can be unlocked using a flexible webbing, allowing a seat and a frame of the stroller to fold synchronously. In the unlocking process by lifting and pulling the webbing, the two ends of the flexible webbing may experience unbalanced forces and swaying, especially if the stroller or the frame thereof is relatively heavy, which may lead to failure in unlocking the connecting joints at the left and right sides of the frame synchronously. In addition, in the process of unlocking and folding the stroller via the flexible webbing, if the position of lifting and pulling the flexible webbing deviates from the substantially middle of the flexible webbing, the stroller or the frame of the stroller may tilt, and the flexible webbing may fail to transmit sufficient driving force to the connecting joints, which requires the user to lift the stroller and further shake it forcefully to unlock the connecting joints. This process demands more effort from the user. In other words, using the flexible webbing to unlock and fold the stroller or the frame of the stroller may not be an effortless task.

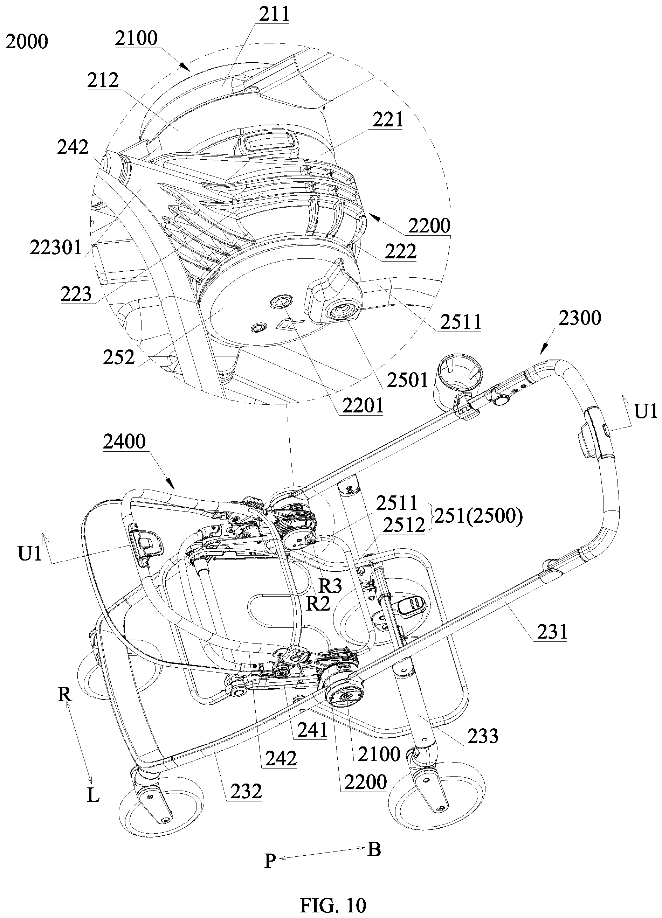

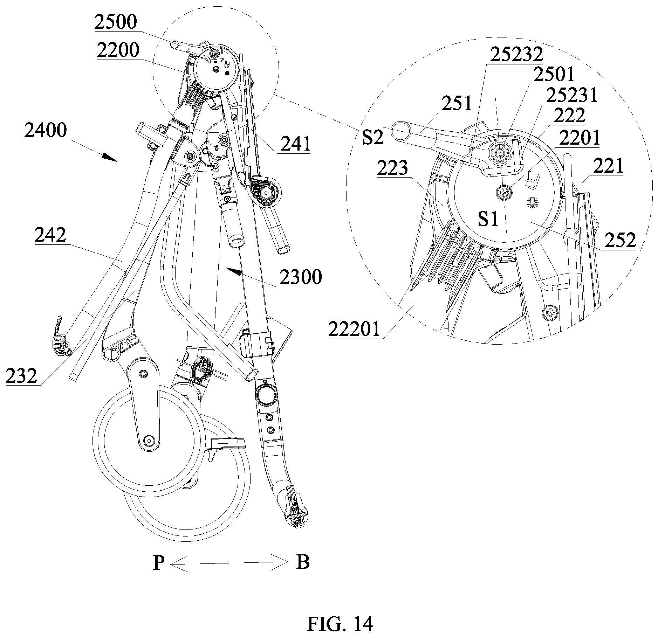

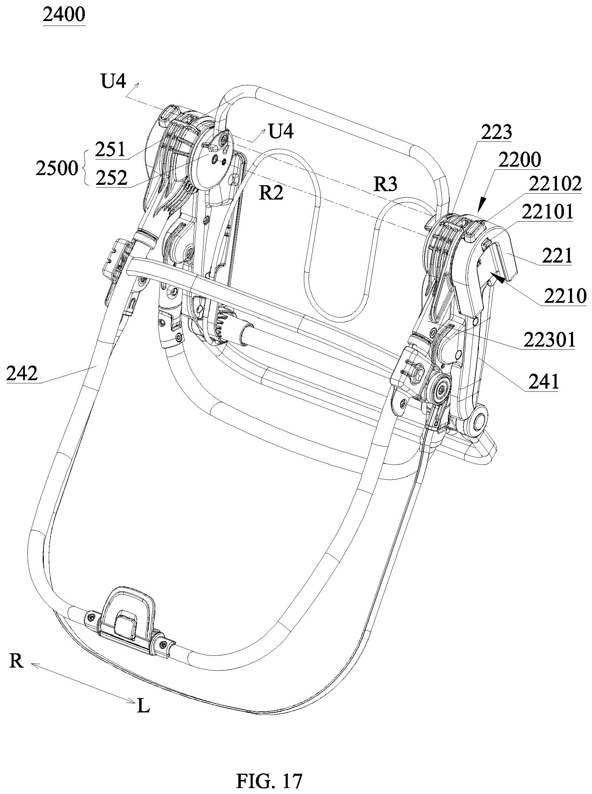

In view of the above issues, the second embodiment of the present disclosure provides a child carrier and a child carrying device thereof, as shown in FIG. 10 to FIG. 20.

Referring to FIG. 10, a child carrier 2000 provided according to the second embodiment of the present disclosure is shown. The child carrier 2000 includes a supporting device 2300 and a child carrying device 2400 provided according to the second embodiment of the present disclosure. The child carrying device 2400 is disposed on the supporting device 2300. The child carrying device 2400 includes a folding joint 2200. The supporting device 2300 includes a connecting joint 2100. The folding joint 2200 is connected to the connecting joint 2100 such that the child carrying device 2400 is connected to the supporting device 2300. Exemplarily, the folding joint 2200 is removably connected to the connecting joint 2100, such that the child carrying device 2400 is removably connected to the supporting device 2300. In the second embodiment of the present disclosure, the child carrier 2000 is described with a stroller as an example. The supporting device 2300 is specifically a frame of the stroller. The child carrying device 2400 may be a foldable seat, a folding frame for use in combination with a baby cradle, or the like. Specifically, the child carrying device 2400 is described with a foldable seat as an example. In alternative embodiments, the form of the child carrier 2000 is not limited to a stroller, but may be, for example, a child bed frame or other products. The forms of the supporting device 2300 and the child carrying device 2400 may vary depending on the form of the child carrier 2000.

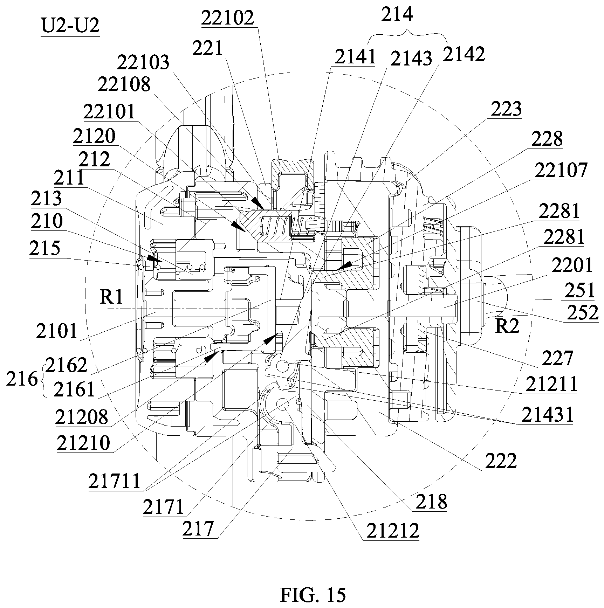

Referring to FIG. 10, in some embodiments, the child carrier 2000 has a substantially left-right symmetrical structure. The supporting device 2300 includes, for example, a handlebar 231, a front leg frame 232, a rear leg frame 233, and the connecting joint 2100. The handlebar 231 and the front leg frame 232 are connected to each other by one connecting joint 2100 at each of right and left sides of the supporting device 2300. The handlebar 231 is pivotally connected to the rear leg frame 233. Referring also to FIG. 15, more specifically, the connecting joint 2100 includes a first connecting base 211 and a second connecting base 212. The first connecting base 211 and the second connecting base 212 are pivotally connected to each other via a pivot shaft 2101 (see FIG. 15) such that they can rotate relative to each other. The pivot shaft 2101 defines a pivot axis R1 of the connecting joint 2100 (see, for example, FIG. 15).

Referring again to FIG. 10, the child carrying device 2400 includes a seat tube 241, a backrest tube 242, an operation assembly 2500, and the folding joint 2200. The seat tube 241 and the backrest tube 242 are connected to each other by one folding joint 2200 at each of right and left sides of the child carrying device 2400. The folding joint 2200 includes a mounting base 221, a first pivoting base 222, and a second pivoting base 223. The mounting base 221, the first pivoting base 222, and the second pivoting base 223 are pivotally connected to each other via the first pivot shaft 2201 such that they can rotate relative to each other. The first pivot shaft 2201 defines a pivot axis R2 of the folding joint 2200. The mounting base 221 is configured to be removably mounted to the second connecting base 212 of the connecting joint 2100 such that the child carrying device 2400 is removably mounted to the supporting device 2300. The second pivoting base 223 has a connecting sleeve 22301. The backrest tube 242 is sleeved into the connecting sleeve 22301.

It should be noted that, unless otherwise expressly specified and defined, in the second embodiment of the present disclosure, the orientation terms such as "front", "rear", "left", and "right" are based on the orientations of a child riding in the child carrier. In the drawings, the 'front' and 'rear' directions are indicated by arrows P and B, respectively, while the 'left' and 'right' directions are indicated by arrows L and R, respectively. These orientation terms are used only to make the description of the second embodiment of the present disclosure clearer and are not intended to unduly limit the scope of protection of the present disclosure.

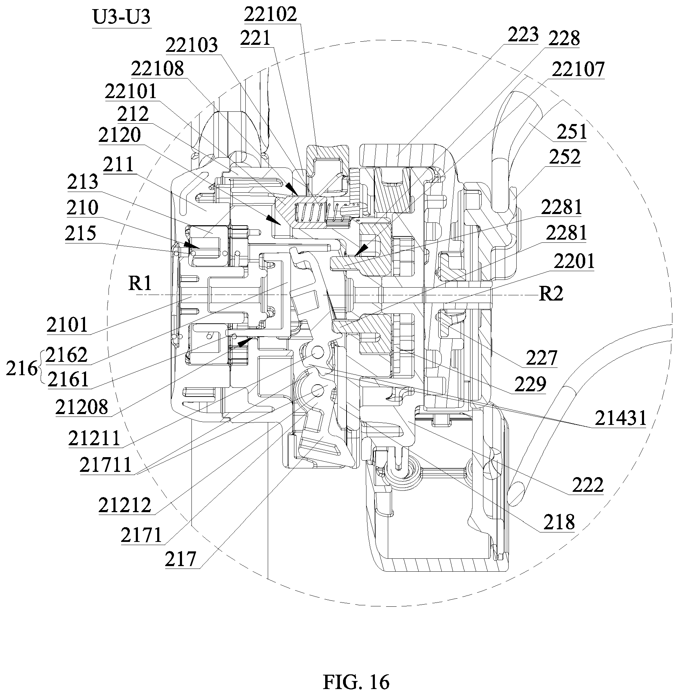

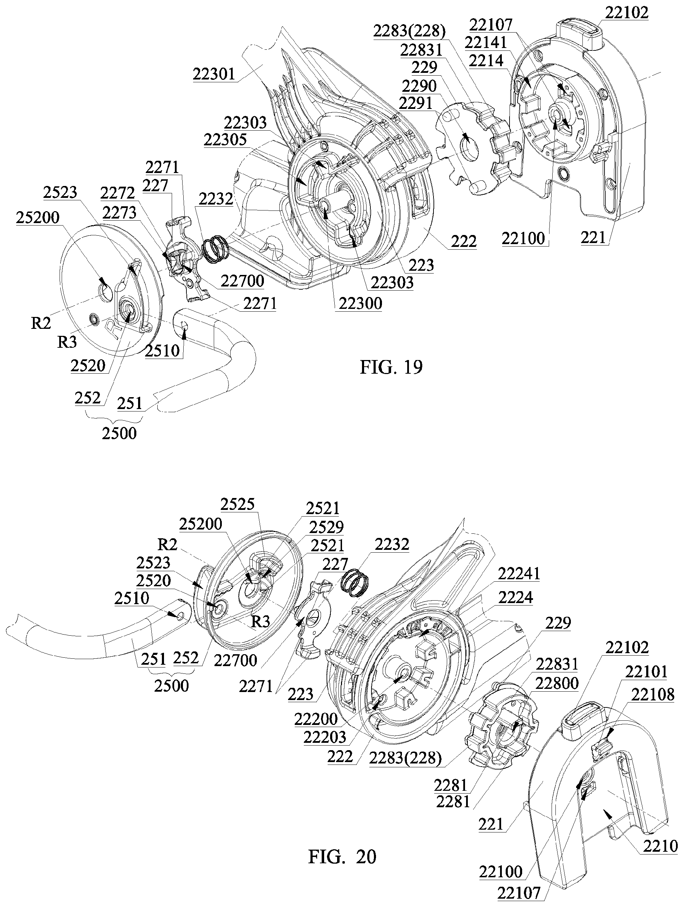

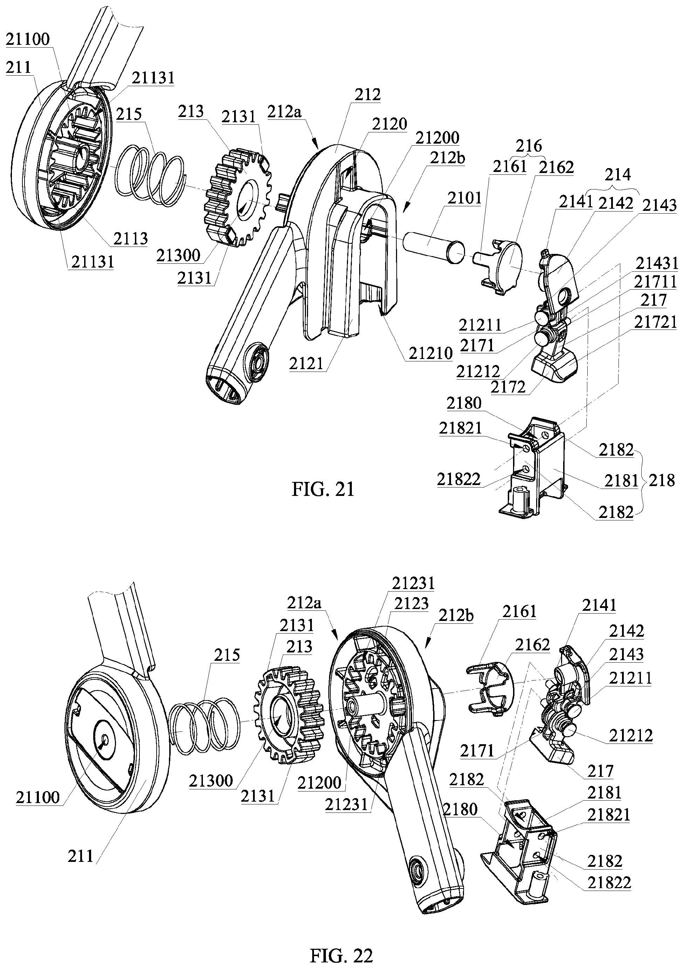

Referring to FIG. 15 and FIG. 16, an exemplary structure of the second connecting base 212 of the connecting joint 2100 and the mounting base 221 of the folding joint 2200 are illustrated. Referring also to FIG. 21 and FIG. 22, the first connecting base 211 is positioned at a first side 212a of the second connecting base 212, which may also be referred to as an outer side of the second connecting base 212. A locking hole 2120 is provided on a second side 212b of the second connecting base 212, which may also be referred to as an inner side of the second connecting base 212. An engagement table 2121 that is protruded outwardly is also provided on the second side 212b of the second connecting base 212. The engagement table 2121 is positioned under the locking hole 2120. An end face of the engagement table 2121 (i.e., an end face of the second connecting base 212 on the second side 212b) is provided with a mounting recess 21210. Referring also to FIG. 20, the mounting base 221 is provided with an engagement groove 2210 and a through-hole 22108 on a side thereof facing the second connecting base 212. The mounting base 221 is mounted with a locking member 22101, an unlocking member 22102, and a resilient reset member 22103. The locking member 22101 is, for example, a locking pin. The resilient reset member 22103 drives the locking member 22101 to extend out of the through-hole 22108. The unlocking member 22102 is operably connected to the locking member 22101 to drive the locking member 22101 to retract into the through-hole 22108. When the mounting base 221 is mounted to the second connecting base 212, the engagement groove 2210 of the mounting base 221 is engaged with the engagement table 2121 of the second connecting base 212, and the locking member 22101 is inserted into the locking hole 2120. In order to remove the mounting base 221, the unlocking member 22102 can be pressed to drive the locking member 22101 to withdraw from the locking hole 2120, and then the engagement groove 2210 of the mounting base 221 can be disengaged from the engagement table 2121 of the second connecting base 212.

Referring to FIG. 15 and FIG.16, in some embodiments, the connecting joint 2100 further includes a detent member 213, a first release member 214, and a drive member 216. The detent member 213 is movably disposed between the first connecting base 211 and the second connecting base 212, and has a detent position and a release position. The first release member 214 is operably connected to the detent member 213 via the drive member 216, such that the first release member 214 drives the detent member 213 indirectly via the drive member 216 to move from the detent position to the release position. In some embodiments, a chamber 210 is formed between the first connecting base 211 and the second connecting base 212. The detent member 213 may be a detent gear. The detent member 213 may be disposed in the chamber 210 and axially movable in the chamber 210. More specifically, referring also to FIG. 21 and FIG. 22, the pivot shaft 2101 extends through a center hole 21100 of the first connecting base 211, a center hole 21300 of the detent member 213, and a center hole 21200 of the second connecting base 212. Referring to FIG. 21 and FIG. 22, in some embodiments, the first connecting base 211 has a first inner ring gear 2113, and the second connecting base 212 has a second inner ring gear 2123. Referring to FIG. 15, when the detent member 213 is in the detent position, the detent member 213 is engaged with both the first inner ring gear 2113 and the second inner ring gear 2123 to fix the relative position between the first connecting base 211 and the second connecting base 212. Referring to FIG. 16, when the detent member 213 is in the release position, the detent member 213 is moved into the first connecting base 211 along the pivot shaft 2101 to disengage from the second inner ring gear 2123 of the second connecting base 212, so that the first connecting base 211 and the second connecting base 212 is allowed to rotate relative to each other. In some alternative embodiments, the detent member 213 may be implemented in other ways, such as in a pin structure, which is not limited in the present disclosure.

Referring to FIG. 21 and FIG. 22, in some embodiments, a resilient reset member 215 may also be disposed in the chamber 210. The resilient reset member 215 is configured to apply a force to the detent member 213 to reset the detent member 213 to the detent position. In some embodiments, the resilient reset member 215 is, for example, a spring mounted between the first connecting base 211 and the detent member 213. In some alternative embodiments, the implementation of the resilient reset member 215 may vary depending on the implementation of the detent member 213.

Refer again to FIG. 21 and FIG. 22, the detent member 213 has at least one limiting tooth 2131 with a tooth width greater than that of other teeth of the detent member 213. Correspondingly, the first inner gear ring 2113 is provided with at least one first limiting tooth groove 21131, while the second inner gear ring 2123 is provided with at least one second limiting tooth groove 21231. The number of each of the first limiting tooth groove 21131 and the second limiting tooth groove 21231 corresponds to the number of the limiting tooth 2131. The at least one limiting tooth 2131 is adapted to engage with each of the at least one first limiting tooth groove 21131 and the at least one second limiting tooth groove 21231. Exemplarily, there are two limiting teeth 2131 arranged axisymmetrically on the outer periphery of the detent member 213. When the supporting device 2300 is in the unfolded state, the first limiting tooth grooves 21131 are aligned with the respective second limiting tooth grooves 21231, and two ends of each of the limiting teeth 2131 are adapted to be engaged with corresponding ones of the first limiting tooth grooves 21131 and the second limiting tooth grooves 21231, respectively. When connecting joint 2100 is in the locked state, the first connecting base 211 is unable to rotate relative to the second connecting base 212. When the supporting device 2300 switches between the unfolded state and the folded state, the detent member 213 is positioned in the first connecting base 211 and disengaged from the second connecting base 212, the first connecting base 211 rotates relative to the second connecting base 212, the second limiting tooth grooves 21231 are misaligned with the first limiting tooth grooves 21131 (and the limiting teeth 2131), the end of the second inner ring gear 2123 blocks the limiting teeth 2131 and resists the force applied to the detent member 213 by the resilient reset member 215 to restrict the detent member 213 from moving to the detent position, thereby restricting the detent member 213 from being engaged with the second inner ring gear 2123 of the second connecting base 212, consequently, the detent member 213 is limited to the release position, allowing the first connecting base 211 to continue to rotate relative to the second connecting base 212 until the supporting device 2300 is switched to the folded state. In this way, the support device 2100 can be switched between the unfolded state and the folded state without requiring to continuously push the first release member 214, which is convenient for operation.

Referring to FIG. 15 and FIG.16, the drive member 216 is interposed between the first release member 214 and the detent member 213. The first release member 214 drives the detent member 213 indirectly via the drive member 216. In some embodiments, the drive member 216 includes, for example, a third push portion 2161 and a third abutment portion 2162. The third abutment portion 2162 is, for example, disk-shaped. The third push portion 2161 includes, for example, at least one leg portion extending from the third abutment portion 2162. The third abutment portion 2162 is positioned in the mounting recess 21210 and abuts against the first push portion 2141 of the first release member 214. A wall of the second connecting base 212 between the mounting recess 21210 and the chamber 210 is provided with at least one through-hole 21208. The third push portion 2161 extends through the through-hole 21208 to abut against the detent member 213. The third push portion 2161 is slidingly fitted in the through-hole 21208 to guide the drive member 216 to move in the axial direction of the pivot shaft 2101. By providing the drive member 216 that moves in the axial direction, the design difficult of the first release member 214 can be reduced, as along as the first release member 214 can push the drive member 216 via the first push portion 2141. In some alternative embodiments, the drive member 216 may be omitted, the first push portion 2141 of the first release member 214 includes, for example, at least one protruded structure such as a leg or a cylinder (not shown), and the protruded structure of the first push portion 2141 extends through the at least one through-hole 21208 of the second connecting base 212 to directly abut against the detent member 213. This facilitates a reduction in the number of parts and ease of assembly.

Referring to FIG. 15 and FIG. 16, in some embodiments, the first release member 214 is mounted to the second connecting base 212. Specifically, the first release member 214 is pivotally connected to the second connecting base 212 by a first shaft 21211 perpendicular to the pivot shaft 2101. The first release member 214 includes a first push portion 2141 and a first abutment portion 2142. The first push portion 2141 extends, for example, from the first abutment portion 2142. When the first release member 214 is subjected to an external driving force (e.g., an external force directly applied to the first abutment portion 2142, or an external force indirectly transmitted to the first abutment portion 2142 via the folding joint 2200, etc.), the first release member 214 rotates around the first shaft 21211, while the first push portion 2141 of the first release member 214 directly or indirectly pushes the detent member 213 to move from the detent position to the release position. It is to be understood that the external driving force refers to a force from outside of the connecting joint 2100 where the first release member 214 is located. Referring to FIG. 21 and FIG. 22, the first release member 214 is disposed at the second side 212b of the second connecting base 212, and the second side 212b of the second connecting base 212 is configured to connect to the mounting base 221. In some embodiments, the first release member 214 is disposed in the mounting recess 21210. When the child carrying device 2400 is mounted to the supporting device 2300, the first release member 214 is covered by the mounting base 221, which prevents the first release member 214 from being accidentally touched. More specifically, the accidental folding of the supporting device 2300 due to accidental touching of the first release member 214 when the child carrying device 2400 is in the unfolded state and supports a child can be prevented.

Referring to FIG. 15 and FIG. 16, in some embodiments, the connecting joint 2100 further includes a second release member 217 operably connected to the first release member 214. The second release member 217 is positioned in the mounting recess 21210 and is pivotably connected to the second connecting base 212 by a second shaft 21212. The second shaft 21212 is parallel to the first shaft 21211. A first end of the second release member 217 is engaged with the first release member 214. A second end of the second release member 217 is provided with a second abutment portion 2172. When the second release member 217 is subjected to no external driving force, the second abutment portion 2172 is protrudes out of the second connecting base 212. When the second abutment portion 2172 of the second release member 217 is subjected to an external driving force, the first release member 214 is driven to rotate due to the engagement of the first end of the second release member 217 with the first release member 214. That is, the first release member 214 can be indirectly driven to rotate by pressing the second abutment portion 2172 of the second release member 217. It is to be understood that an external driving force is a force that comes from outside of the connecting joint 2100 in which the second release member 217 is located. The first release member 214 has a first connecting portion 2143 sleeved onto the first shaft 21211. The first connecting portion 2143 has a first tooth structure (tooth) 21431. The second release member 217 has a second connecting portion 2171 sleeved onto the second shaft 21212. The second connecting portion 2171 has a second tooth structure (tooth) 21711. The first tooth structure 21431 of the first connecting portion 2143 is engaged with the second tooth structure 21711 of the second connecting portion 2171. This gear drive mechanism between the first release member 214 and the second release member 217 can, on the one hand, increase the pushing stroke of the first release member 214, and on the other hand, reduce the pushing force of the second release member 217 and increase the pushing stability of the second release member 217, thereby increasing the stability and effectiveness of the locking process of the connecting joint 2100, and realizing the rapid folding of the connecting joint 2100. In some alternative embodiments, the first release member 214 and the second release member 217 may be engaged with other or movably connected to each other by other suitable structures.

Referring to FIG. 15, FIG. 16, FIG. 21, and FIG. 22, in some embodiments, the connecting joint 2100 may further include a fixing bracket 218. The fixing bracket 218 includes, for example, two side walls 2182 opposite to each other and a plate 2181 connected between the two side walls 2182. The plate 2181 and the two side walls 2182 define a cavity 2180. The two side walls 2182 are each provided with a first mounting hole 21821 and a second mounting hole 21822. The first shaft 21211 is mounted through the first mounting holes 21821 of the two side walls 2182. The second shaft 21212 is mounted through the second mounting holes 21822 of the two side walls 2182. The first connecting portion 2143 and the second connecting portion 2171 are accommodated in the cavity 2180. The fixing bracket 218 is mounted in the mounting recess 21210. The opening of the mounting recess 21210 is partially closed by the plate 2181 to prevent the external parts from interfering with the engagement of the first connecting portion 2143 with the second connecting portion 2171.

Referring to FIG. 15 and FIG. 16, in some embodiments, the first release member 214 rotates around the first shaft 21211 when it is driven by the second release member 217 or the folding joint 2200 or when it is directly pressed by the user. The first release member 214 in rotation can drive the drive member 216 to release the detent member 213 such that the detent member 213 can move from the detent position to the release position. It should be appreciated that, upon removal of the driving force applied to the first release member 214, the detent member 213 is driven and reset by the first resilient reset member 215 from the release position to the detent position, and accordingly, the drive member 216 is driven and reset by the detent member 213, while the first release member 214 is driven and reset by the drive member 216. In some alternative embodiments, a torsion spring for resetting the first release member 214 may be mounted on the first shaft 21211.

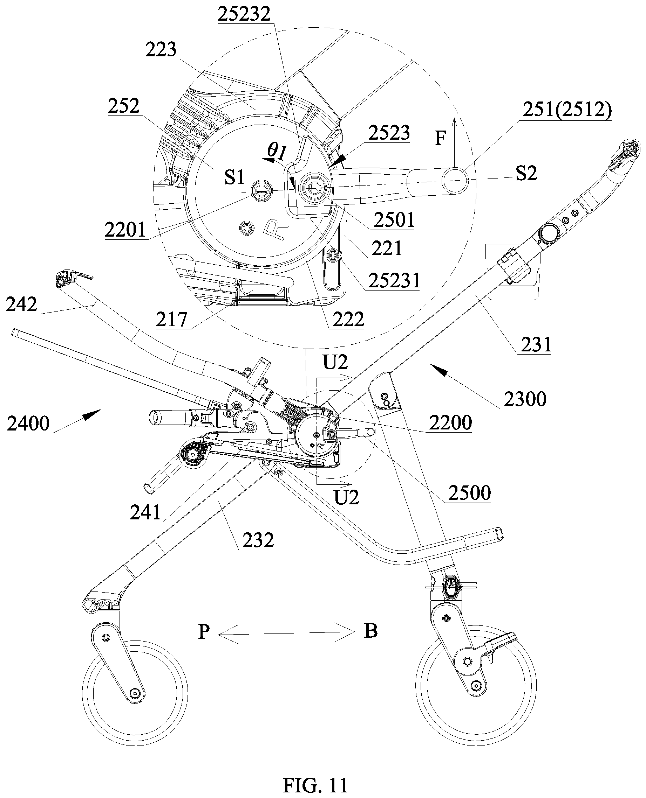

Referring to FIG. 11 to FIG. 16, the schematic structures of the child carrying device 2400, the folding joint 2200 of the child carrying device 2400, and the operation assembly 2500 in FIG. 10 is shown.

Referring to FIG. 15 and FIG. 16, the operation assembly 2500 is operatively connected to the folding joint 2200 and can drive the folding joint 2200 to switch from the locked state to the unlocked state (i.e., the operation assembly 2500 can unlock the folding joint 2200). The folding joint 2200 includes a push member 227, a folding locking member 228, the mounting base 221, the first pivoting base 222, and the second pivoting base 223. Referring also to FIG. 19 and FIG. 20, the first pivot shaft 2201 extends through a center hole 22100 of the mounting base 221, a center hole 22200 of the first pivoting base 222, and a center hole 22300 of the second pivoting base 223, such that the mounting base 221, the first pivoting base 222, and the second pivoting base 223 are pivotably connected to each other via the first pivot shaft 2201 and thus can rotate relative to each other. The first pivot shaft 2201 defines a pivot shaft R2 of the folding joint 2200. The first pivoting base 222 is sandwiched between the mounting base 221 and the second pivoting base 223, that is, the first pivoting base 222 is disposed at the side of the second pivoting base 223 facing the mounting base 221. The folding locking member 228 is disposed between the first pivoting base 222 and the mounting base 221 and is adapted to lock the relative rotation between the first pivoting base 222 and the mounting base 221. The push member 227 is disposed between the operation assembly 2500 and the second pivoting base 223, that is, the push member 227 is disposed at the side of the second pivoting base 223 facing away from the mounting base 221. The push member 227 is adapted to cooperate with the operation assembly 2500 and is indirectly or directly drivingly connected to the folding locking member 228. The operation assembly 2500 is adapted to drive the folding locking member 228 indirectly via the push member 227 or directly to unlock the relative rotation between the first pivoting base 222 and the mounting base 221.

Referring to FIG. 15, FIG. 16, and FIG. 18, in some embodiments, a chamber 220 is formed between the mounting base 221 and the first pivoting base 222. The folding locking member 228 is received in the chamber 220. The folding locking member 228 may be a toothed wheel with a center hole 22800 (see FIG. 20) sleeved onto the first pivot shaft 2201. The folding locking member 228 is disposed in the chamber 220 and axially movable in the chamber 220. The folding locking member 228 has a locking position and an unlocking position. When the folding locking member 228 is in the locking position, the folding locking member 228 engages with both the mounting base 221 and the first pivoting base 222 to fix the relative position of the mounting base 221 and the first pivoting base 222, such that the folding joint 2200 is in the locked state. When the folding locking member 228 is in the unlocking position, the folding locking member 228 is moved into the mounting base 221 along the first pivot shaft 2201 and disengaged from the first pivoting base 222 to allow the relative rotation of the mounting base 221 and the first pivoting base 222, such that the folding joint 2200 is in the unlocked state. In some embodiments, a resilient reset member 226 is further mounted in the chamber 220. The resilient reset member 226 is configured to drive the folding locking member 228 to move to the locking position. The resilient reset member 226 is, for example, a spring that is interposed between the mounting base 2221 and the folding locking member 28.

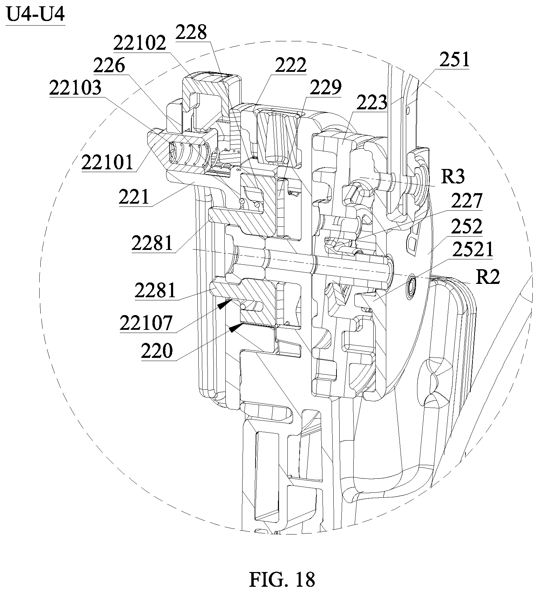

Referring to FIG. 19 and FIG. 20, the folding locking member 228 is provided with an outer ring gear 2283. The outer ring gear 2283 includes at least one limiting tooth 22831 having a tooth width greater than those of other teeth of the outer ring gear 2283. Accordingly, the first pivoting base 222 is provided with a first inner ring gear 2224 formed with at least one limiting tooth groove 22241, and the mounting base 221 is provided with a second inner ring gear 2214 formed with at least one second limiting tooth groove 22141. When the folding locking member 228 is in the locking position, the limiting tooth 22831 is adapted to engage with each of the first limiting tooth groove 22241 and the second limiting tooth groove 22141. Exemplarily, two limiting teeth 22831 are provided, while two first limiting tooth grooves 22241 and two second limiting tooth grooves 22141 are provided. Referring also to FIG. 15, when the child carrying device 2400 is in the unfolded state (not shown), the first limiting tooth grooves 22241 are aligned with respective second limiting tooth grooves 22141, and each of the limiting teeth 22831 of the folding locking member 228 is engaged with corresponding ones of the first limiting tooth grooves 22241 and of the second limiting tooth grooves 22141 (i.e., in the direction of the pivot axis R2, a part of each of the limiting teeth 22831 is engaged with the corresponding one of the first limiting tooth grooves 22241, and another part of each of the limiting teeth 22831 is engaged with the corresponding one of the second limiting tooth grooves 22141) to restrict the relative rotation between the first pivoting base 222 and the mounting base 221. Referring also to FIG. 16, when the child carrying device 2400 switches between the unfolded state and the folded state, the folding locking member 228 is positioned within the mounting base 221 and disengaged from the first pivoting base 222, the first pivoting base 222 rotates relative to the mounting base 221, the second limiting tooth grooves 22141 are misaligned with the first limiting tooth grooves 22241, and the end of the first inner gear ring 2224 blocks the limiting teeth 22831 and resists the force of the resilient reset member 226 (see FIG. 18) applied to the folding locking member 228 to restrict the folding locking member 228 from moving to the locking position, thereby restricting the folding locking member 228 from engaging with the first inner ring gear 2224 of the first pivoting base 222, consequently, the folding locking member 228 is limited to the unlocking position, and the first pivoting base 222 and the mounting base 221 can continue to pivot relative to each other, enabling the child carrying device 2400 to switch to the folded state. In this way, the folding locking member 228 can be held in the unlocking position to allow the first pivoting base 222 and the second pivoting base 223 to pivot downwardly under gravity, without the need to continually apply an external force to the operation assembly 2500, which makes the operation convenient.

Referring to FIG. 15, FIG. 16, and FIG. 18, the folding locking member 228 is provided with at least one protruding finger 2281. A wall of the mounting base 221 between the engagement groove 2210 and the chamber 220 is provided with at least one through-hole 22107. The at least one protruding finger 2281 is adapted to extend through the at least one through-hole 22107 to push the first release member 214 to rotate around the first shaft 21211. Exemplarily, the folding locking member 228 is provided with a plurality of protruding fingers 2281, such as two protruding fingers 2281. The protruding fingers 2281 are uniformly arranged in a circumferential direction of the folding locking member 228 and collectively guide the axial movement of the folding locking member 228. The protruding fingers 2281 are slidingly fitted in the respective through-holes 22107. It should be appreciated that the sliding direction of the individual protruding fingers 2281 is parallel to the first pivot shaft 2201. As the folding locking member 228 switches between the locking position and the unlocking position, the at least one protruding finger 2281 telescopes with respect to the at least one through-hole 22107. Referring to FIG. 15 to FIG. 16, during the movement of the folding locking member 228 from the locking position to the unlocking position, the at least one protruding finger 2281 protrudes out of the at least one through-hole 22107 and directly pushes against the first abutment portion 2142 of the first releasing member 214, causing the first releasing member 214 to rotate around the first shaft 21211 to indirectly or directly (via or not via the drive member 216) drive the first detent member 213 to move from the detent position to the release position. That is, the connecting joint 2100 can be unlocked by the folding joint 2200 during the unlocking of the folding joint 2200 to allow for the folding of the supporting device 2300.

Referring to FIG. 18 to FIG. 20, in some embodiments, a movable piece 229 is also mounted in the chamber 220. The movable piece 229 has a center hole 2290 sleeved onto the first pivot shaft 2201. The movable piece 229 is positioned between the folding locking member 228 and the first pivoting base 222. The movable piece 229 is provided with at least one abutment post 2291 extending away from the folding locking member 228. The first pivoting base 222 has at least one through-hole 22203. The at least one abutment post 2291 is slidingly fitted in the at least one through-hole 22203. The folding locking member 228 is drivingly connected to the push member 227 via the movable piece 229 and the at least one abutment post 2291.

Referring to FIG. 18 to FIG. 20, in some embodiments, the center hole 22700 of the push member 227 is sleeved onto the first pivot shaft 2201 (see FIG. 15). The push member 227 has at least one push post 2271. The second pivoting base 223 has at least one through-hole 22303. The at least one push post 2271 is slidingly fitted in the at least one through-hole 22303. The at least one push post 2271 is configured to push the at least one abutment post 2291 to cause the movable piece 229 to push the folding locking member 228 to move from the locking position to the unlocking position. In some embodiments, the folding joint 2200 may also be provided with a resilient reset member 2232 that is configured to drive the push member 227 to move away from the movable piece 229. The resilient reset member 2232 is, for example, a spring interposed between the push member 227 and the second pivoting base 223.

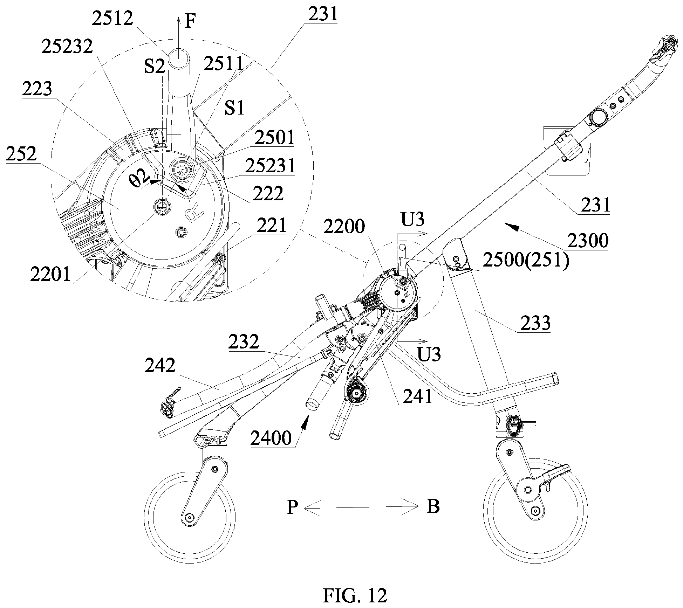

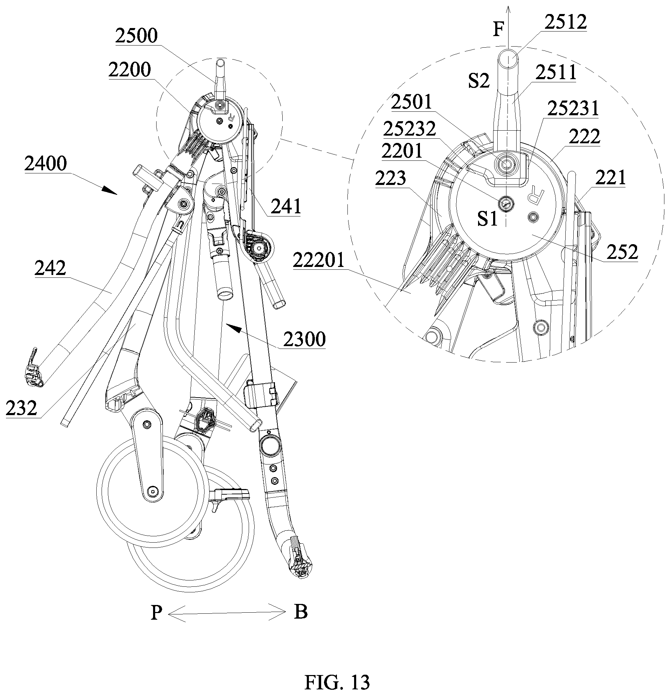

Referring to FIG. 11 to FIG. 14, in some embodiments, the operation assembly 2500 includes an operation member 251 and a folding unlocking member 252. The folding unlocking member 252 is operably connected to the folding joint 2200 to unlock the folding joint 2200. The folding unlocking member 252 is pivotally connected to the first pivot shaft 2201 and is capable of rotating relative to the second pivoting base 223 to drive the push member 227 to move in the axial direction, such that the push post 2271 of the push member 227 pushes the abutment post 2291 of the movable piece 2221 to unlock the folding joint 2200. Referring to FIG. 11 and FIG. 13, the folding unlocking member 252 has a first position and a second position. When the folding unlocking member 252 is in the first position, the folding joint 2200 is in the locked state, and the folding locking member 228 is in the locking position and restricts the rotation of the first pivoting base 222 relative to the mounting base 221. Referring to FIG. 12, when the folding unlocking member 252 rotates from the first position to the second position, the folding unlocking member 252 rotates relative to the second pivoting base 223 and unlock the folding joint 2200 indirectly via the push member 227 (i.e., drive the folding locking member 228 from the locking position to the unlocking position indirectly via the push member 227), thereby allowing the rotation of the first pivoting base 222 relative to the mounting base 221. There are, for example, two folding unlocking members 252 connected to the folding joints 2200 at right and left sides, respectively. There is, for example, one operation member 251 connected to each of the two folding unlocking members 252.

For ease of description, one of the folding unlocking members 252 and one of the folding joints 2200 connected thereto are illustrated below as an example.

Referring to FIG. 19 and FIG. 20, in some embodiments, the folding unlocking member 252 is provided with a first cooperation portion thereon. The push member 227 is provided with a second cooperation portion thereon. The first cooperation portion is configured to cooperate with the second cooperation portion in a concave-convex fitting manner and to be slidable relative to the second cooperation portion along the surface of the second cooperation portion. The first cooperation portion is provided with at least one first convex portion 2521 and at least one first concave portion 2529. Each first convex portion 2521 at least partially define a wall of the first concave portion 2529 adjacent thereto. There is a smooth transition between a highest point of each first convex portion 2521 and a lowest point of the adjacent first concave portion 2529. The at least one first convex portion 2521 includes, for example, at least one tooth structure. Exemplarily, there are, for example, at least two first convex portions 2521. Any two adjacent first convex portions 2521 define one first concave portion 2529 therebetween. The second cooperation portion is provided with at least one second convex portion 2272 and at least one second concave portion 2273. The at least one second convex portion 2272 is capable of cooperating with the at least one first concave portion 2529 in a concave-convex fitting manner. The at least one second concave portion 2273 is capable of cooperating with the at least one convex portion 2521 in a concave-convex fitting manner. Each second convex portion 2272 at least partially define a wall of the concave portion 2273 adjacent thereto. There is a smooth transition between a highest point of each second convex portion 2271 and a lowest point of the adjacent second concave portion 2273. This facilitates the withdrawal of each convex portion 2521 from the corresponding second concave portion 2273. Specifically, the at least one second convex portion 2272 includes, for example, at least one tooth structure.

When the folding unlocking member 252 is in the first position, the at least one first convex portion 2521 is in concave-convex fit with the at least one second concave portion 2273, and the at least one second convex portion 2272 is in concave-convex fit with the at least one first concave portion 2529, that is, the first cooperation portion is in concave-convex fit with the second cooperation portion. As the folding unlocking member 252 rotates from the first position to the second position, the first cooperation portion slides along the surface of the second cooperation portion to cause the at least one first convex portion 2521 to abut against the at least one second convex portion 2272, thereby pushing the push member 227 in a direction away from the folding unlocking member 252 along the first pivot shaft 2201, such that the push post 2271 of the push member 227 abuts against the abutment post 2291 of the movable piece 229 and drives the folding locking member 228 to move to the unlocking position. It should be appreciated that when the user no longer apply a force to the operation member 251, the push member 227 has a tendency to move in a direction away from the second pivoting base 223 (i.e., in a direction toward the folding unlocking member 252) to be reset under the action of the resilient reset member 2232. When the at least one second convex portion 2272 of the push member 227 is misaligned with the at least one first convex portion 2521 of the folding unlocking member 252 (i.e., when the at least one second convex portion 2272 of the push member 227 is aligned with at least one first concave portion 2529 of the folding unlocking member 252, and the at least one first convex portion 2521 of the folding unlocking member 252 is aligned with the at least one second concave portion 2273 of the push member 227), the push member 227 is driven and reset by the resilient reset member 2232. It should be understood that when the at least one first convex portion 2521 abuts against the at least one second convex portion 2272, a highest point of at least one of the at least one first convex portion 2521 abuts against a highest point of at least one of the at least one second convex portion 2272.

Referring again to FIG. 19 and FIG. 20, in some embodiments, the second pivoting base 223 and the folding unlocking member 252 are provided with a rotation limiting mechanism to limit the range of the relative rotation therebetween, i.e., to limit the pivot stroke of the folding unlocking member 252. For example, an arc-shaped groove 22305 may be provided on the second pivoting base 223, and an arc-shaped protrusion 2525 may be provided on the folding unlocking member 252, with the arc-shaped protrusion 2525 positioned in the arc-shaped groove 22305. The ends of the arc-shaped protrusion 2525 can selectively abut against the ends of the arc-shaped groove 22305 to limit the range of the relative rotation between the second pivoting base 223 and the folding unlocking member 252. In some embodiments, the positions of the arc-shaped groove 22305 and the arc-shaped protrusion 2525 on the second pivoting base 223 and the folding unlocking member 252 are interchangeable.

Referring to FIG. 11 to FIG. 14, the folding unlocking member 252 includes a main body 2522. The main body 2522 is substantially disk-shaped. The first pivot shaft 2201 extends through the main body 2522 at a substantially central position of the main body 2522. Referring also to FIG. 19 and FIG. 20, the arc-shaped protrusion 2525 and the first convex portion 2521 are provided on the side of the main body 2522 facing the push member 227 (also referred to as the inner side of the folding unlocking member 252). The main body 2522 is provided with a limiting recess 2523 thereon. An opening of the limiting recess 2523 is formed substantially at the outer periphery of the main body 2522. The limiting recess 2523 is configured to connect to the operation member 251.

Referring to FIG. 11 to FIG. 14, in some embodiments, the operation member 251 is a rigid member and is pivotably connected to the folding unlocking member 252 via a second pivot shaft 2501, such that the operation member 251 is capable of rotating relative to the folding unlocking member 252. The second pivot shaft 2501 defines a pivot axis R3 of the operation member 251. The second pivot shaft 2501 is parallel to and offset from the first pivot shaft 2201. The operation member 251 is adapted to drive the folding unlocking member 252 to rotate relative to the second pivoting base 223 (i.e., relative to the folding joint 2200). Specifically. the operation member 251 is adapted to drive the folding unlocking member 252 to rotate relative to the second pivoting base 223 (i.e., relative to the folding joint 2200) via the second pivot shaft 2501 to unlock the folding joint 2200. As compared to the coaxial arrangement of the second pivot shaft 2501 and the first pivot shaft 2201, the offset of the second pivot shaft 2501 from the first pivot shaft 2201 in this embodiment can increase the torque corresponding to the force applied by the user to the operation member 251, thus making the unlocking operation more labor-saving. In addition, by pivotably connecting the rigid operation member 251 to the folding unlocking member 252, the failure of the operation member 251 to transmit sufficient driving force to the folding joint 2200 due to the deformation and skewing of the operation member 251 when it is operated can be avoided. Due to the rigid structure of the operation member 251, the direction of the force applied to the operation member 251 can be well controlled, so that the operation member 251 can more effectively transmit the driving force to the folding joint 2200, and the situation where the folding joints 2200 at two sides are subjected to unevenly distributed loads which causes asynchronized unlocking of the folding joints 2200 can be avoided, there by achieving the rapid folding of the child carrier 2000 in a more efficient manner with less effort.

The operation member 251 is pivotally connected to the wall of the limiting recess 2523 via the second pivot shaft 2501. Specifically, the wall of the limiting recess 2523 is provided with a pivot hole 2520. An end of the operation member 251 is inserted into the limiting recess 2523 and provided with a pivot hole 2510. The second pivot shaft 2501 extends through the pivot holes 2520 and 2510 to pivotally connect the end of the operation member 251 to the wall of the limiting recess 2523. The limiting recess 2523 has a first side wall 25231 and a second side wall 25232 located at two sides of the second pivot shaft 2501, respectively. The operation member 251 is adapted to be selectively blocked by the first side wall 25231 and the second side wall 25232, so that the position and the rotation range of the operation member 251 relative to the folding unlocking member 252 are limited. Specifically, the operation member 251 has a first limited position and a second limited position. When the operation member 251 is in the first limited position, the operation member 251 abuts against the first side wall 25231. When the operation member 251 is in the second limited position, the operation member 251 abuts against the second side wall 25232. The folding unlocking member 252 has a first position. When the folding unlocking member 252 is in the first position, the operation member 251 is in the first limited position.

Refer again to FIG. 11 to FIG. 14, when the operation member 251 is subjected to a pulling force F, the operation member 251 is enabled to rotate relative to the folding unlocking member 252 around the second pivot shaft 2501, and the operation member 251 can drive the folding unlocking member 252 to rotate from the first position to the second position via the second pivot shaft 2501 to unlock the folding joint 2200, and can further drive the folding unlocking member 252 to rotate from the second position to a third position. When the folding unlocking member 252 is in the first position, the pulling force F applied to the operation member 251 has a vertically upward component. When the folding unlocking member 252 is driven by the operation member 251 to rotate to the second position, the direction of the pulling force F applied to the operation member 251 is vertically upward. During the rotation of the folding unlocking member 252 from the second position to the third position, the folding joint 2200 remains in the unlocked state, and the direction of the pulling force F applied to the operation member 251 remains in the vertical upward direction.

Referring to FIG. 10 to FIG. 14, the operation member 251 is provided with an operation portion 2512 adapted to be operated. The operation portion 2512 is located away from the second pivot shaft 2501. The operation member 251 is, for example, substantially U-shaped. The operation member 251 includes two connecting portions 2511 and a crossbar connected between the two connecting portions 2511. The crossbar serves as the operation portion 2512. The connecting portions 2511 are each, for example, rod-shaped. The two connecting portions 2511 are pivotably connected to the two folding unlocking members 252 via the second pivot shafts 2501, respectively. As such, the operation of the operation portion 2512 of the operation member 251 can unlock both the folding joints 2200 at right and left sides. Additionally, since the operation member 251 is rigid, the deformation of the operation member 251 in operation is very small (even negligible), so that the child carrier 2000 is not easily tilted even if the force-subjecting position of the operation member 251 is deviated from the center of the operation portion 2512, and the folding joints 2200 at right and left sides can be unlocked at the same time.

Referring to FIG. 11, in some embodiments, when the folding unlocking member 252 is in the first position, the folding joint 2200 is in the locked state, and the operation portion 2512 of the operation member 251 is positioned above the horizontal plane where the first pivot shaft 2201 is located and/or above the horizontal plane where the second pivot shaft 2501 is located. In this way, the operation member 2512 of the operation member 251 can be conveniently lifted and operated. It is to be understood that "the operation portion 2512 of the operation member 251 is positioned above the horizontal plane where the first pivot shaft 2201 is located and/or above the horizontal plane where the second pivot shaft 2501 is located" includes the following different implementation manners: (a) the operation portion 2512 of the operation member 251 is positioned above the horizontal plane where the first pivot shaft 2201 is located but under the horizontal plane where the second pivot shaft 2501 is located; (b) the operation portion 2512 of the operation member 251 is positioned above the horizontal plane where the second pivot shaft 2501 is located but under the horizontal plane where the first pivot shaft 2201 is located; and (c) the operation portion 2512 of the operation member 251 is positioned above both the horizontal plane where the first pivot shaft 2201 is located and the horizontal plane where the second pivot shaft 2501 is located. In other words, the operation portion 2512 of the operation member 251 is positioned above at least one of the horizontal plane where the first pivot shaft 2201 is located and the horizontal plane where the second pivot shaft 2501 is located. In this embodiment, when the folding unlocking member 252 is in the first position, the operation portion 2512 of the operation member 251 is positioned above both the horizontal plane where the first pivot shaft 2201 is located and the horizontal plane where the second pivot shaft 2501 is located, and a first angle θ1 between the plane defined collectively by the first pivot shaft 2201 and the second pivot shaft 2501 (i.e., a first plane S1) and the vertical direction is an acute angle. In some embodiments not shown, the first angle θ1 may be a right angle or an obtuse angle, which is not limited in the present disclosure. Referring again to FIG. 11, in some embodiments, when the folding unlocking member 252 is in the first position, the plane defined collectively by the operation portion 2512 and the second pivot shaft 2501 (i.e., a second plane S2) is coplanar with the plane defined collectively by the first pivot shaft 2201 and the second pivot shaft 2501. It is to be understood that the plane defined collectively by the first pivot shaft 2201 and the second pivot shaft 2501 refers to a plane where both the pivot axis R2 of the first pivot shaft 201 and the pivot axis R3 of the second pivot shaft 501 are located, and the plane defined collectively by the operation portion 2512 and the second pivot shaft 2501 refers to a plane where both the substantially middle of the operation portion 2512 and the pivot axis R3 of the second pivot shaft 2501 are located.

As the folding unlocking member 252 rotates from the first position to the second position, the folding unlocking member 252 rotates relative to the second pivoting base 223 of the folding joint 2200 to unlock the folding joint 2200. When the folding unlocking member 252 rotates to the second position, both the folding joint 2200 and the connecting joint 2100 are unlocked to allow for the folding of the child carrier 2000. Additionally, when the folding unlocking member 252 rotates to the second position, the second angle θ2 formed between the first plane S1 and the vertical direction is an acute angle, and the second angle θ2 is smaller than the first angle θ1. At this point, the second plane S2 is parallel to the direction of the pulling force F applied to the operation member 251, and the direction of the pulling force F is upward directed in the vertical direction.

As the operation member 251 is further pulled, the operation member 251 drives the folding unlocking member 252 to rotate from the second position to the third position around the first pivot shaft 2201 via the second pivot shaft 2501 under the action of the pulling force F. When the folding unlocking member 252 is in the third position, the first plane S1 is parallel to the direction of the pulling force F, the pulling force F is upward directed in the vertical direction, and the folding joint 2200 is in the unlocked state. During the rotation of the folding unlocking member 252 from the second position to the third position, the second plane S2 remains parallel to the direction of the pulling force F, the pulling force F remains upward directed in the vertical direction, and both the folding joint 2200 and the connecting joint 2100 are in the unlocked state, so that the child carrier 2000 can be automatically folded under the action of gravity.

In order to reduce the volume of the child carrier 2000 or the child carrying device 2400 that is folded, the operation member 251 is rotated in a direction toward the second side wall 25232 of the limiting recess 2523 (i.e., a direction of the rotation of the folding unlocking member 252 from the first position to the third position) to abut against the inner wall of the second side wall 25232, so that the operation member 251 is deflected away from the vertical direction. As such, the volume of the child carrying device 2400 in the vertical direction is reduced. In some embodiments, the second sidewall 25232 is inclined to the first plane S1, and the distance between the second sidewall 25232 and the first plane S1 decreases from a position close to the opening end of the limiting recess 2523 to a position away from the opening end of the limiting recess 2523.

The folding operation of the child carrier 2000 is briefly described below with reference to FIG. 11 to FIG. 16.

To fold the child carrier 2000, the backrest tube 242 is firstly pushed forward and downward such that the backrest tube 242 drives the folding unlocking member 252 to rotate along with it due to the concave-convex fit between the first cooperation portion and the second cooperation portion. During this process, the operation member 251 rotates with the folding unlocking member 252 since the operation member 251 is blocked by the first side wall 25231. Referring also to FIG. 11, FIG. 15, FIG. 19, and FIG. 20, when the backrest tube 242 is folded in place, the folding unlocking member 252 is in the first position, the push post 2271 of the push member 227 is aligned with the abutment post 2291 of the movable piece 229, and the folding joint 2200 is in the locked state. Then a pulling force F is applied to the operation portion 2512 of the operation member 251 to cause the operation member 251 to rotate relative to the folding unlocking member 252, while the operation member 251 drives the folding unlocking member 252 to rotate relative to the second pivoting base 223 and the mounting base 221 toward the second position via the second pivot shaft 2501. During the rotation of the folding unlocking member 252 toward the second position, the push member 227 moves in the axial direction such that the push post 2271 thereof pushes the abutment post 2291 of the movable piece 229 to move the movable piece 229 in the axial direction, and the movable piece 229 in the axial movement drives the folding locking member 228 to move toward the unlocking position. Referring to FIG. 12 and FIG. 16, when the folding unlocking member 252 is in the second position, the at least one first convex portion 2521 of the first cooperation portion abuts against the at least one second convex portion 2272 of the second cooperation portion, and the push member 227 drives the folding locking member 228 to move to the unlocking position via the movable piece 229, allowing the relative rotation of the first pivoting base 222 and the mounting base 221, so that the child carrying device 2400 can be further folded. Additionally, during the process of driving the folding locking member 228 to move toward the unlocking position, the protruding finger 2281 on the folding locking member 228 pushes against the first release member 214. Referring to FIG. 15 and FIG. 16, it can be seen in conjunction with the above that the first release member 214 pushed by the folding locking member 228 rotates around the first shaft 21211 to directly or indirectly drive the detent member 213 to move to the release position, thereby releasing the lock between the first connecting base 211 and the second connecting base 212 and allowing the folding of the supporting device 2300.

As the operation portion 2512 of the operation member 251 is further pulled upward in the vertical direction, the operation member 251 drives the folding unlocking member 252 to rotate upward around the first pivot shaft 2201 via the second pivot shaft 2501, and the supporting device 2300 of the child carrier 2000 is folded under gravity, during which the detent member 213 remains in the release position. At the same time, the first pivoting base 222 and the second pivoting base 223 of the child carrying device 2400 rotates downwardly around the first pivoting shaft 2201 under gravity, such that the child carrier 2000 is further folded.

Referring to FIG. 13, FIG. 17, and FIG. 18, when the child carrier 2000 is folded in place, the folding unlocking member 252 rotates to the third position, with the pivot axis R3 defined by the second pivot shaft 2501 being substantially directly above the pivot axis R2 defined by the first pivot shaft 2201 (i.e. the first plane S1 is substantially parallel to the vertical direction). Thereafter, the vertically upward pulling force F can be released, and the operation member 251 can rotate toward the second side wall 25232 of the limiting recess 2523 to abut against the second side wall 25232 of the limiting recess 2523, which can further reduce the volume of the child carrier 2000 that is folded (specifically, the longitudinal volume of the child carrier 2000 that is folded). Upon completion of the folding of the child carrier 2000, the folding locking member 228 is blocked by the end of the first inner gear ring 2224 of the mounting base 221 and is limited to the unlocking position, and the detent member 213 is blocked by the end of the second inner gear ring 2123 and is limited to the release position. In other words, after the child carrier 2000 is folded in place, the supporting device 2300 is able to switch to the unfolded state, and the child carrying device 2400 is also able to switch to the unfolded state. In addition, after the child carrier 2000 is folded, when the push member 227 moves toward the folding unlocking member 252 along the first pivot shaft 2201 and is reset under the force of the resilient reset member 2232, the second cooperation portion of the push member 227 is in convex-concave fit with the first cooperation portion of the folding unlocking member 252.

The unfolding operation of the child carrier 2000 is briefly described below with reference to FIG. 11 to FIG. 16.

As can be seen from the above, after the child carrier 2000 is folded in place, both the folding joint 2200 of the child carrying device 2400 and the connecting joint 2100 of the supporting device 2300 are in the unlocked state, allowing the supporting device 2300 and the child carrying device 2400 to switch to the unfolded state.

Firstly, an external force is applied to the handlebar 231 such that the handlebar 231 drives the first connecting base 211 to rotate relative to the second connecting base 212 to switch the supporting device 2300 from the folded state to the unfolded state (see FIG. 12). At this point, as shown in FIG. 16 and FIG. 18, the child carrying device 2400 remains in the folded state, and the at least one protruding finger 2281 of the folding locking member 228 abuts against the first release member 214 to indirectly restrict the detent member 213 in the release position. Then, the backrest tube 242 is rotated upward to drive the second pivoting base 223 to rotate with it relative to the first pivoting base 222 and the mounting base 221. During this process, the push member 227 rotates with the second pivoting base 223 and misaligned with the abutment post 2291 of the movable piece 229. With the second cooperation portion of the push member 227 in concave-convex fit with the first cooperation portion of the folding unlocking member 252, along with force of the resilient reset member 2232 applied to the push member 227, the push member 227 drives the folding unlocking member 252 to rotate with the second pivoting base 223.

The backrest tube 242 is further rotated upward to drive the first pivoting base 222 and the folding unlocking member 252 to rotate together relative to the mounting base 221 via the second pivoting base 223. Based on the above discussion, it can be known that when the second pivoting base 223 rotates to the extent that the first limiting tooth grooves 22241 are aligned with the respective second limiting tooth grooves 22141, the limiting tooth 22831 is no longer blocked by the first inner gear ring 2224, and the folding locking member 228 is reset to the locking position under the action of the force of the resilient reset member 226, which causes detent member 213 to move axially and reset to the detent position under the action of the force of the resilient reset member 215 to lock the supporting device 2300 in the unfolded state. During the axial movement of the detent member 213, the detent member 213 pushes the drive member 216 to move and reset, the drive member 216 pushes the first release member 214 to rotate and reset, and the first release member 214 pushes the second release member 217 to rotate and reset, thereby locking the supporting device 2300 in the unfolded state.

In the child carrier and the child carrying device provided according to the second embodiment of the present disclosure, the operation member is a rigid member and is pivotably connected to the folding unlocking member via the second pivot shaft that is offset from the first pivot shaft. As compared to the coaxial arrangement of the second pivot shaft and the first pivot shaft, the offset of the second pivot shaft from the first pivot shaft in the present disclosure can increase the torque corresponding to the force applied by the user to the operation member, thus making the unlocking operation more labor-saving. In addition, by pivotably connecting the rigid operation member to the folding unlocking member, the failure of the operation member to transmit sufficient driving force to the folding joint due to the deformation and skewing of the operation member when it is operated can be avoided. Due to the rigid structure of the operation member, the direction of the force applied to the operation member can be well controlled, so that the operation member can more effectively transmit the driving force to the folding joint, and the situation where the folding joints at two sides are subjected to unevenly distributed loads which causes asynchronized unlocking of the folding joints can be avoided, there by achieving the rapid folding of the child carrier 2000 in a more efficient manner with less effort.

### Third embodiment

The child carrier, such as a stroller, is typically designed with a folding function that minimizes the space it occupies, making it easier to store and transport. However, it is difficult for the conventional child carrier to control the folding speed during the folding process, which can lead to violent impacts between the frame components, potentially causing damage to the stroller.

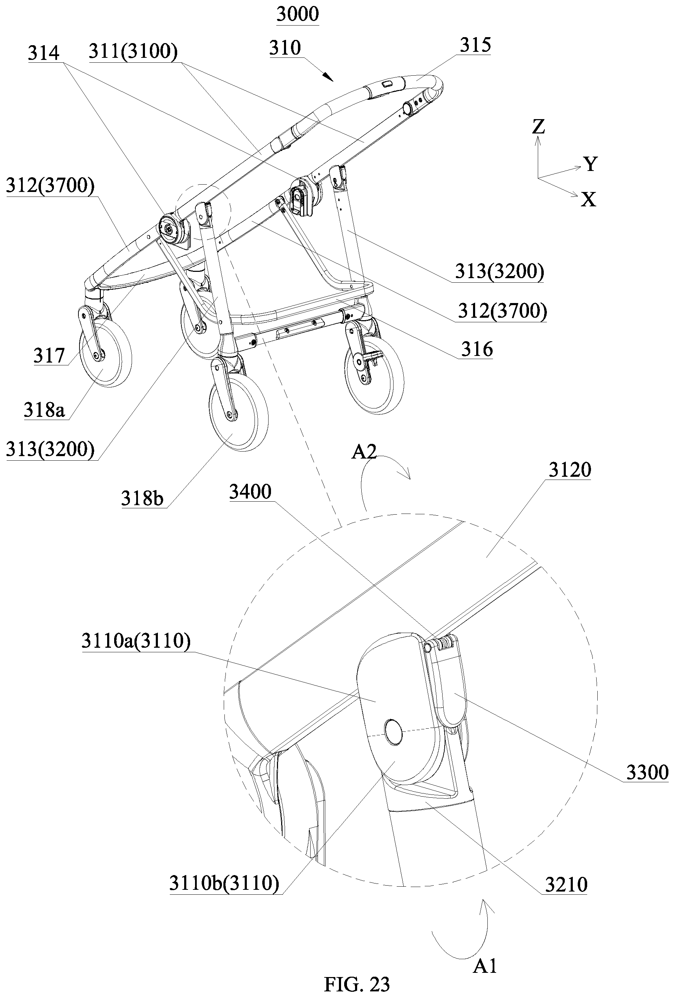

In view of this, a frame and a child carrier including the same are provided according to a third embodiment of the present disclosure, as shown in FIG. 23 to FIG.28.

Specifically, as shown in FIG. 23, a child carrier (e.g., a stroller) 3000 is provided according to the third embodiment of the present disclosure, which includes a frame 310. The frame 310 includes a first frame body 3100, a second frame body 3200, a third frame body 3700, a linkage frame body 316, and a locking joint 314. The first frame body 3100 is pivotally connected to the second frame body 3200. The locking joint 314 is connected between the first frame body 3100 and the third frame body 3700, and the first frame body 3100 is pivotally connected to the third frame body 3700 by the locking joint 314. The linkage frame body 316 is pivotally connected to each of the second frame body 3200 and the third frame body 3700. The locking joint 314 has a locked state and an unlocked state. When the locking joint 314 is in the locked state, the first frame body 3100 and the third frame body 3700 are locked to each other such that they are unable to rotate relative to each other, and the frame 310 is in the unfolded state as shown in FIG. 23. When the locking joint 314 is in the unlocked state, the first frame body 3100 and the third frame body 3700 are able to rotate relative to each other, and the frame 310 can be switched from the unfolded state to the folded state. In this embodiment, the pivoting position of the first frame body 3100 and the second frame body 3200 is arranged off-axis from the locking joint 314, i.e., the second frame body 3200 and the third frame body 3700 are pivotably connected to the first frame body 3100 at different positions of the first frame body 3100, respectively.

For ease of understanding, a coordinate system is established in the drawings. As shown in FIG. 23, the frame 310 is connected to the front wheel assembly 318a and the rear wheel assembly 318b. When the frame 310 is placed on a horizontal plane, it is defined that the front wheel assembly 318a is located at the front side of the rear wheel assembly 318b, i.e., the front wheel assembly 318a is located in a negative direction of the X-axis with respect to the rear wheel assembly 318b. The positive direction of the Z-axis is parallel to the vertically upward direction. Two locking joints 314 are located in a line parallel to the direction of the Y-axis, and the locking joint 314 at the right side is located in a positive direction of the Y-axis with respect to the locking joint 314 at the left side.

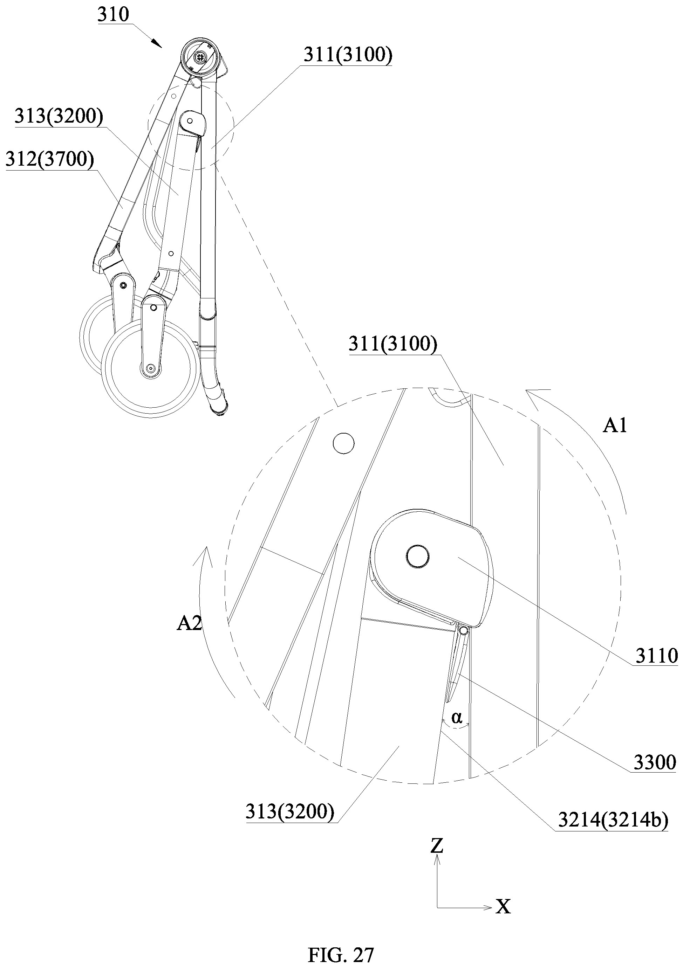

Referring to FIG. 23, FIG. 26, and FIG. 27, during the switching process of the frame 310 from the unfolded state to the folded state, the first frame body 3100 and the second frame body 3200 get closer to each other, and the linkage frame body 316 drives the third frame body 3700 and the second frame body 3200 to get closer to each other. More specifically, during the switching process of the frame 310 from the unfolded state to the folded state, taking the second frame body 3200 as a reference, the first frame body 3100 rotates backward and downward toward the second frame body 3200, and the third frame body 3700 rotates backward toward the second frame body 3200. As shown in FIG. 27, when the frame 310 is in the folded state, the first frame body 3100 is located behind the second frame body 3200, and the third frame body 3700 is located in front of the second frame body 3200. In other embodiments, the rotation direction between the first frame body 3100, the second frame body 3200, and the third frame body 3700 may vary, for example, the first frame body 3100 rotates forward and downward toward the third frame body 3700.

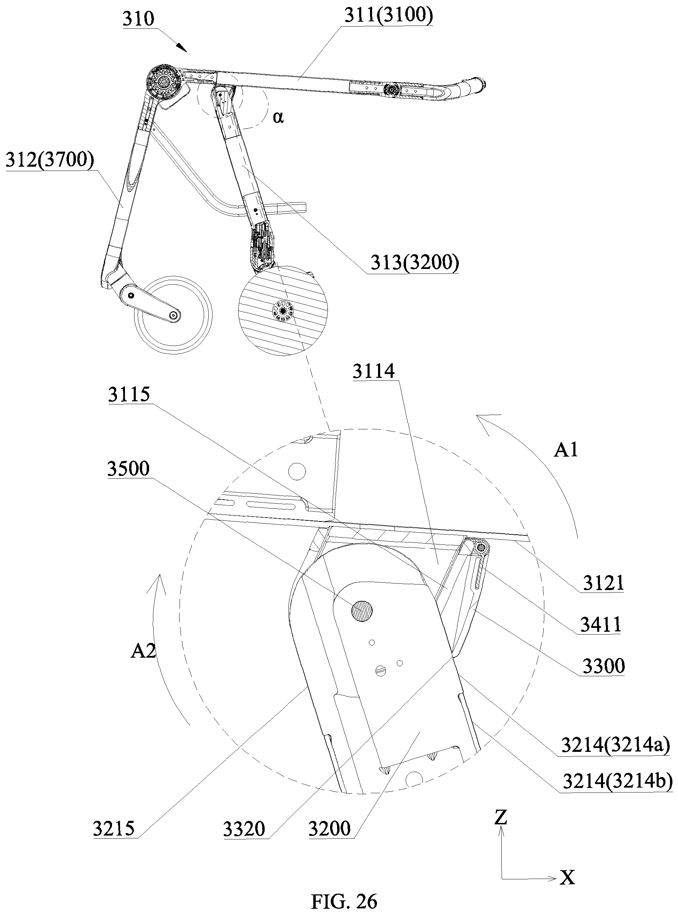

It should be noted that the relative rotation between the first frame body 3100 and the second frame body 3200 can exhibit different rotation directions depending on the chosen reference method. For example, in this embodiment, during the switching process of the frame 310 from the unfolded state to the folded state, the relative rotation between the first frame body 3100 and the second frame body 3200 may be viewed as either the rotation of the second frame body 3200 relative to the first frame body 3100 in the first rotation direction A1 or the rotation of the first frame body 3100 relative to the second frame body 3200 in the second rotation direction A2 opposite to the first rotation direction A1. Taking the perspective of Figure 26 as an example, the first rotation direction A1 corresponds to the counterclockwise direction of FIG. 26, while the second rotation direction A2 corresponds to the clockwise direction of FIG. 26. For ease of understanding, in the following, the relative rotation between the first frame body 3100 and the second frame body 3200 will be described mainly with the rotation of the second frame body 3200 relative to the first frame body 3100 as an example.

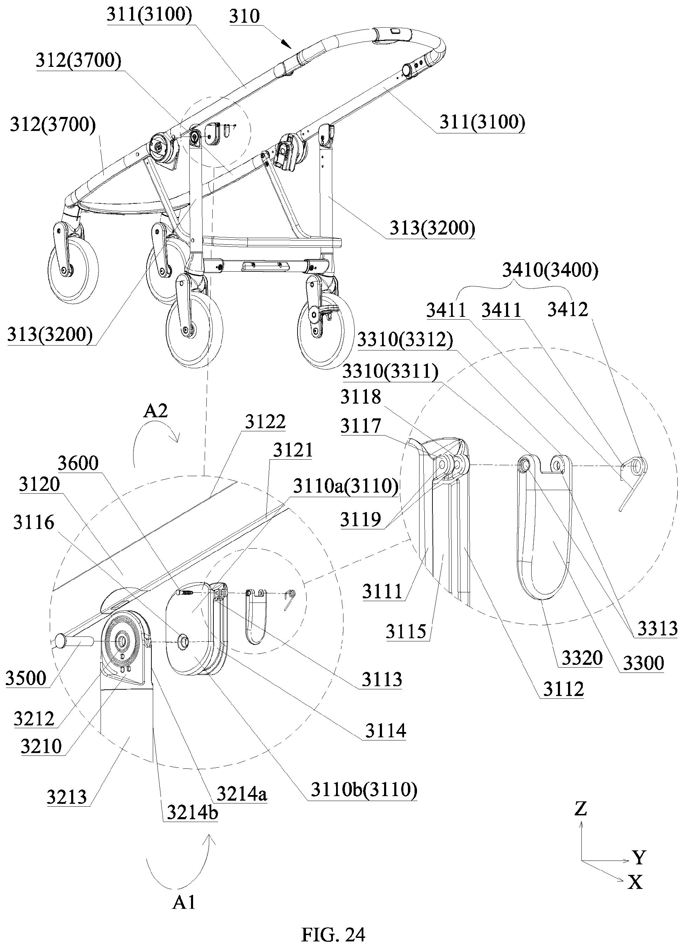

Referring to FIG. 24 to FIG. 26, the frame 310 further includes a rotation member 3300 and a buffer member 3400. The rotation member 3300 is pivotally connected to the first frame body 3100, i.e., the rotation member 3300 is rotatable relative to the first frame body 3100. The buffer member 3400 is connected to the rotation member 3300. The buffer member 3400 is configured to apply a force to the rotation member 3300 intended to rotate the rotation member 3300 relative to the first frame body 3100 in the second rotation direction A2 opposite to the first rotation direction A1. As the second frame body 3200 rotates relative to the first frame body 3100 in the first rotation direction A1, the frame 310 switches from the unfolded state to the folded state. During the rotation of the second frame body 3200 relative to the first frame body 3100 in the first rotation direction A1, the second frame body 3200 drives the rotation member 3300 to rotate relative to the first frame body 3100 in the first rotation direction A1. In this embodiment, the rotation member 3300 has a pivot end 3310 pivotally connected to the first frame body 3100 and a cooperation end 3320 cooperating with the second frame body 3200. The cooperation end 3320 and the pivot end 3310 are located at opposite ends of the rotation member 3300. In this embodiment, the cooperation end 3320 cooperates with and abuts against the second frame body 3200. The second frame body 3200 drives the rotation member 3300 to rotate relative to the first frame body 3100 in the first rotation direction A1 by pushing against the cooperation end 3320.

It should be understood that when the second frame body 3200 rotates relative to the first frame body 3100 in the first rotation direction A1, the second frame body 3200 drives the rotation member 3300 to rotate relative to the first frame body 3100 in the first rotation direction A1. However, since the buffer member 3400 apply a force to the rotation member 3300 intended to rotate the rotation member 3300 relative to the first frame body 3100 in the second rotation direction A2, the buffer member 3400 has a damping effect on the rotation of the rotation member 3300 relative to the first frame body 3100 in the first rotation direction A1, which increase the resistance to the rotation of the rotation member 3300 relative to the first frame body 3100 in the first rotation direction A1, thereby reducing the speed of the rotation of the rotation member 3300 relative to the first frame body 3100 in the first rotation direction A1. As such, a violent collision between the first frame body 3100 and the second frame body 3200 can be avoided during the folding process of the frame 310, or a collision between other components driven by the first frame body 3100 and the ground or other structures can be avoided.

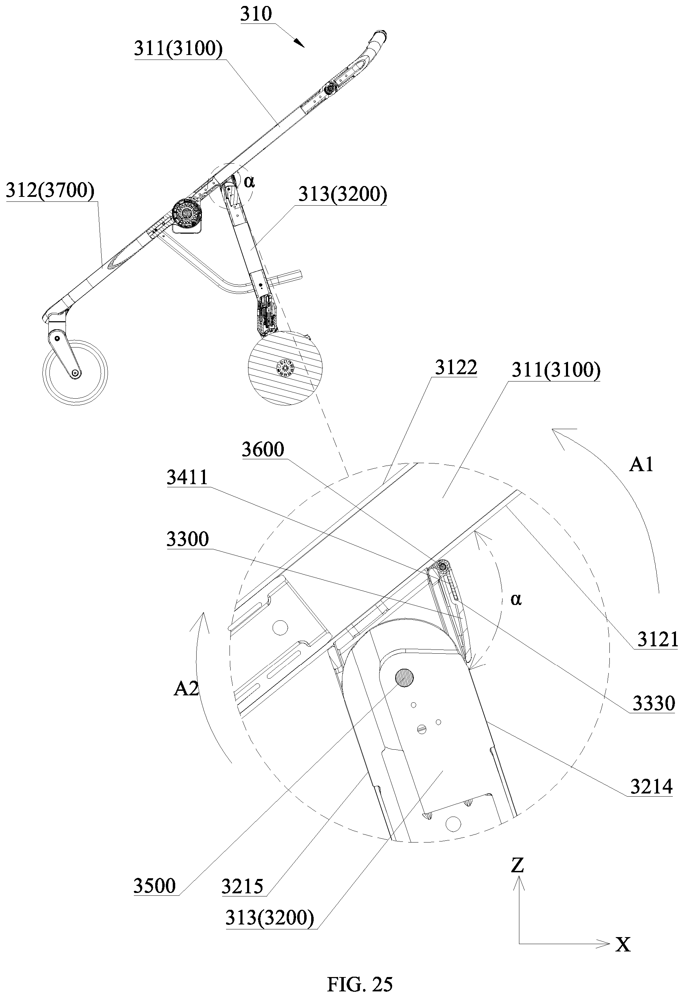

Referring to FIG. 25 to FIG. 28, a first angle α is formed between the first frame body 3100 and the second frame body 3200. During the folding process of the frame 310, the first angle α gradually decreases, and the rotation member 3300 is positioned in an angular area of the first angle α (i.e., an area corresponding to the first angle α). More specifically, the first frame body 3100 has a first edge 3121 and a second edge 3122 opposite to each other. The first edge 3121 is located at the side of the first frame body 3100 facing the rotation member 3300. The second frame body 3200 has a third edge 3214 and a fourth edge 3215 opposite to each other. The third edge 3214 is located at the side of the second frame body 3200 facing the rotation member 3300. The first angle α is formed between the first edge 3121 and the third edge 3214. A value of the first angle α when the frame 310 is in the unfolded state is greater than a value of the first angle α when the frame 310 is in the folded state. In other words, when the frame 310 is in the folded state, the first edge 3121 is closer to the third edge 3214 than the second edge 3122, while the third edge 3214 is closer to the first edge 3121 than the fourth edge 3215. The rotation member 300 is located in the area between the first edge 3121 and the third edge 3214. During the rotation of the second frame body 3200 relative to the first frame body 3100 in the first rotation directionAl, the rotation member 3300 abuts against the third edge 3214 of the second frame body 3200.

Referring to FIG. 23 and FIG. 24, the first frame body 3100 includes a first main frame body 3120 and a first connecting base 3110 that are connected to each other and arranged at an angle. The first edge 3121 and the second edge 3122 of the first frame body 3100 are two edges of the first main frame body 3120. The second frame body 3200 includes a second main frame body 3213 and a second connecting base 3210 that are connected to each other. The first connecting base 3110 is pivotably connected to the second connecting base 3210. As shown in FIG. 25, when the frame 310 is in the unfolded state, at the position of the cooperation end 3320 of the rotation member 3300, an edge of the first connecting base 3110 facing the rotation member 3300 is closer to the cooperation end 3320 of the rotation member 3300 than an edge of the second connecting base 3210 facing the rotation member 3300. Therefore, when the frame 310 is in the unfolded state, the rotation member 3300 abuts against the edge of the first connecting base 3110 facing the rotation member 3300. In alternative embodiments, at the position of the cooperation end 3320 of the rotation member 3300, the edge of the second connecting base 3210 facing the rotation member 3300 is closer to the cooperation end 3320 of the rotation member 3300 than the edge of the first connecting base 3110 facing the rotation member 3300, and in this case, when the frame 310 is in the unfolded state, the rotation member 3300 abuts against the edge of the second connecting base 3210 facing the rotation member 3300.

Referring to FIG. 24 to FIG. 28, during the switching process of the frame 10 from the unfolded state to the folded state, the edge of the second connecting base 3210 facing the rotation member 3300 pushes against the rotation member 3300 to rotate relative to the first frame body 3100 in the first direction of rotation A1. More specifically, in this embodiment, the second main frame body 3213 and the second connecting base 3210 extend in substantially the same direction, and the second connecting base 3210 protrudes from an end of the second main frame body 3213. The third edge 3214 includes a first section 3214a and a second section 3214b. The first section 3214a of the third edge 3214 of the second frame body 3200 is located on the second connecting base 3210, while the second section 3214b of the third edge 3214 is located on the second main frame body 3213. A first section of the fourth edge 3215 of the second frame body 3200 is located on the second main frame body 3213, while a second section of the fourth edge 3215 is p located on the second connecting base 3210. During the rotation of the second frame body 3200 relative to the first frame body 3100 in the first rotational direction A1 During rotation of the second frame body 3200 relative to the first frame body 3100 in the first rotational direction A1, the cooperation end 3320 of the rotation member 3300 gradually slides from the second connecting base 3210 to the second main frame body 3213, and the rotation member 3300 firstly abuts against the edge of the second connecting base 3210 facing the rotation member 3300 (i.e., the first section 3214a of the third edge 3214) and then abuts against the edge of the second main frame body 3213 facing the rotation member 3300 (i.e., the second section 3214b of the third edge 3214). In other embodiments, if the length of the second connecting base 3210 protruding from the end of the second main frame body 3213 is sufficiently long, the rotation member 3300 may abut against and slide along only the edge of the second connecting base 3210 facing the rotation member 3300 (i.e., the first section 3214a of the third edge 3214); alternatively, if the extension length of the rotation member 3300 is relatively long, the rotation member 3300 may abut against and slide along only the edge of the second main frame body 3213 facing the rotation member 3300 (i.e., the second section 3214b of the third edge 3214).

Further, referring to FIG. 24, the first connecting base 3110 has a first base body 3111 and a second base body 3112 spaced apart from each other. In this embodiment, the first base body 3111 and the second base body 3112 are of the same shape, both being approximately of a flattened block structure. The first base body 3111 and the second base body 3112 are spaced apart from each other in the Y-axis direction. The first connecting base 3110 also has a cavity 3114 and an opening 3115 in communication with each other. The cavity 3114 is located between the first base body 3111 and the second base body 3112. At least a part of the second connecting base 3210 is embedded in the cavity 3114. The opening 3115 is disposed opposite to the rotation member 3300 and the edge of the second connecting base 3210 facing the rotation member 3300 (i.e., the first section 3214a of the third edge 3214) is exposed through the opening 3115. The first base body 3111 and the second base body 3112 each have a side edge facing the rotation member 3300. More specifically, side edges of the first base body 3111 and the second base body 3112 corresponding to the positive direction of the X-axis face the rotation member 3300. In this embodiment, as shown in FIG. 23 and FIG. 25, when the frame 310 is in the unfolded state, the cooperation end 3320 of the rotation member 3300 abuts against at least one of the edges of the first base body 3111 and the second base body 3112 facing the rotation member 3300. As shown in FIG. 26 and FIG. 27, during the switching process of the frame 310 from the unfolded state to the folded state, the edge of the second connecting base 3210 facing the rotation member 3300 (i.e., the first section 3214a of the third edge 3214) extends out of the opening 3115 and pushes the rotation member 3300 to rotate relative to the first frame body 3100 in the first rotational direction A1. Further, as shown in FIG. 24 and FIG. 26, the first connecting base 3110 further includes a connecting portion 3113 connecting the first base body 3111 to the second base body 3112. The cavity 3114 is defined by the connecting portion 3113, the first base body 3111, and the second base body 3112.

It should be noted that in this embodiment, the connecting portion 3113 is connected to the first main frame body 3120 (e.g., by fasteners such as screws). In other embodiments, the first connecting base 3110 may not be provided with the connecting portion 3113, the first base body 3111 and the second base body 3112 may each be directly connected to the first main frame body 3120 by welding, gluing, or other methods, and the cavity 3114 may be defined by the first base body 3111, the second base body 3112, and the first edge 3121 of the first main frame body 3120. In yet other embodiments, the first connecting base 3110 of the first frame body 3100 may be omitted, and the second frame body 3200 may be directly pivotably connected to the first main frame body 3120.

It should be noted that in this embodiment, the second connecting base 3210 and the second main frame body 3213 may be separate components and mounted to each other to achieved the connection therebetween, for example, a part of the second connecting base 3210 is inserted into the second main frame body 3213. In other embodiments, the second connecting base 3210 and the second main frame body 3213 may be integrally formed, which is not limited herein.

Referring to FIG. 24, FIG. 25, and FIG. 26, a gap exists at the pivot position between the first frame body 3100 and the second frame body 3200 and is obscured by the rotation member 3300. Specifically, there is a gap between the second connecting base 3210 and the first base body 3111, and there is also a gap between the second connecting base 3210 and the second base body 3112. The rotation member 3300 covers the gaps to prevent the user's fingers and other parts of the user from extending into the gaps, thereby preventing the user from being injured during the folding process of the frame 310 and reducing the risk of pinching the user's hand. Specifically, a width (i.e., a dimension along the Y-axis) of the rotation member 3300 is greater than a distance between the first base body 3111 and the second base body 3112, and the rotation member 3300 covers at least a part of the opening 3115.

Referring to FIG. 24 to FIG. 26, the frame 310 further includes a first pivot shaft 3500. The first connecting base 3110 is pivotably connected to the second connecting base 3210 via the first pivot shaft 3500. More specifically, the first connecting base 3110 is provided with a first pivot hole 3116 (the first base body 3111 and the second base body 3112 are each provided with a first pivot hole 3116). The first pivot hole 3116 extends through the first connecting base 3110 along the thickness direction of the first connecting base 3110, i.e., a direction parallel to the Y-axis. The second connecting base 3210 is provided with a second pivot hole 3212. The second pivot hole 3212 is located near a middle portion of the second connecting base 3210 and extends through the second connecting base 3210 along the thickness direction of the second connecting base 3210, i.e., a direction parallel to the Y-axis. The first pivot shaft 3500 is disposed through the first pivot hole 3116 and the second pivot hole 3212 such that the second connecting base 3210 is rotatably connected to the first connecting base 3110.

Further, the first connecting base 3110 has a first portion 3110a between the connection position of the first connecting base 3110 to the first main frame body 3120 and the first pivot shaft 3500. The first connecting base 3110 also has a second portion 3110b between the first pivot shaft 3500 and the end of the first connecting base 3110. To facilitate understanding of the first portion 3110a and the second portion 3110b of the first connecting base 3110, the first portion 3110a and the second portion 3110b are divided by a dotted line in FIG. 23 and FIG. 24. However, in fact, for the integrally formed first connecting base 3110, there is no obvious boundary between the first portion 3110a and the second portion 3110b in appearance. It should be understood that the position and the line type of the dotted line may vary, and the shapes and sizes of the first portion 3110a and the second portion 3110b are not limited by the dotted lines in FIG. 23 and FIG. 24. When the frame 310 is in the unfolded state, the rotation member 3300 shield the area of the opening 3115 that corresponds to the first portion 3110a. The first portion 3110a of the first connecting base 3110 is closer to the connection position between the first connecting base 3110 and the first main frame body 3120 than the second portion 3110b of the first connecting base 3110. Additional, during the folding process, the gap between the second connecting base 3210 and the opening 3115 of the first connecting base 3110 becomes larger and larger, and the risk of pinching user's finger can be effectively reduced by shielding the area of the opening 3115 that corresponds to the first portion 3110a of the first connecting base 3110 by the rotation member 3300. It should be understood that in other embodiments, the rotation member 3300 may further extend to shield the entire opening 3115.

Further, referring again to FIG. 24, the frame 310 further includes a second pivot shaft 3600. The rotation member 3300 is pivotally connected to the first frame body 3100 via the second pivot shaft 3600. In this embodiment, the rotation member 3300 is pivotally connected to first connecting base 3110 via the second pivot shaft 3600, the first connecting base 3110 is provided with a third pivot hole 3119 on a side thereof corresponding to the positive direction of the X-axis, the rotation member 3300 is provided with a fourth pivot hole 3313, and the second pivot shaft 3600 is disposed through the third pivot hole 3119 and the fourth pivot hole 3313. More specifically, the first connecting base 3110 is provided with a first protruding portion 3117 and a second protruding portion 3118, and the rotation member 3300 is provided with a third protruding portion 3311 and a fourth protruding portion 3312. Referring to FIG. 24, specifically, the first protruding portion 3117 and the second protruding portion 3118 are both provided on one end of the connecting portion 3113 in the position direction of the X-axis, and the first protruding portion 3117 and the second protruding portion 3118 are spaced apart from each other in the Y-axis direction. The third protruding portion 3311 and the fourth protruding portion 3312 are also spaced apart from each other in the Y-axis direction, and are both provided on the pivot end 3310 of the rotation member 3300, i.e., the end of the rotation member 3300 in the positive direction of the Z-axis. The first protruding portion 3117 and the second protruding portion 3118 are each provided with a third pivot hole 3119, and the third protruding portion 3311 and the fourth protruding portion 3312 are each provided with a fourth pivot hole 3313. The first protruding portion 3117 and the second protruding portion 3118 are located between the third protruding portion 3311 and the fourth protruding portion 3312. The second pivot shaft 3600 is disposed through the third protruding portion 3311, the first protruding portion 3117, the second protruding portion 3118, and the fourth protruding portion 3312 to pivotably connect the rotation member 3300 to the first connecting base 3110. In other embodiments, the rotation member 3300 may be pivotally connected to first main frame body 3120, i.e., the pivot end 3310 of the rotation member 3300 may be pivotally connected to first main frame body 3120, which is not limited herein.

In some embodiments, the buffer member 3400 is a resilient member. The resilient member may be a torsion spring, a spring, a rubber member, and the like. When the second connecting base 3210 rotates relative to the first connecting base 3110 in the first direction of rotation A1, the rotation member 3300 abuts against the second frame body 3200 and rotates with the second frame body 3200 in the first direction of rotation A1, causing the resilient member to be deformed and generate a reset force which is applied to the rotation member 3300 such that the rotation member 3300 has a tendency to rotate in the second direction of rotation A2. Thus, when the frame 310 switches from the folded state to the unfolded state, the rotation member 3300 is automatically rotated along the second rotational direction A2 by the elastic member, without the need for the user to manually reset the rotation member 3300, improving the convenience of use.

Further, the buffer member 3400 in this embodiment is a torsion spring 3410. In this embodiment, as shown in FIG. 24 and FIG. 26, the torsion spring 3410 includes two torsion arms 3411 and a body 3412. One of the torsion arms 3411 is connected to the first frame body 3100 (e.g., fixedly connected to the connection portion 3113 of the first connecting base 3110). The rotation member 3300 has an accommodation groove 3330 (see FIG. 25), and the other one of the torsion arms 3411 of the torsion spring 3410 is disposed in the accommodation groove 3330 (i.e., the other one of the torsion arms 3411 of the torsion spring 3410 is inserted into the accommodation groove 3330). In this way, the accommodation groove 3330 can effectively prevent the torsion arm 3411 from being disconnected from the rotation member 3300, improve the stability of the connection between the torsion spring 3410 and the rotation member 3300, and can more stably apply a reset force to the rotation member 3300 to prevent the reset from failing. In addition, the first protruding portion 3117 and the second protruding portion 3118 are spaced apart from each other, which can not only reserve installation space for the body 3412 of the torsion spring 3410, but also limit the body 3412, further improving the installation stability of the torsion spring 3410, and preventing the torsion spring 3410 from coming loose.

Referring again to FIG. 23, FIG. 25 and FIG. 28, the frame 310 is placed on a horizontal plane (not shown), and the frame 310 includes a handlebar frame 311, a front leg frame 312, a rear leg frame 313, a push handle 315, a linkage frame 316, and a footrest frame 317. There are two handlebar frames 311 each disposed inclined relative to the horizontal plane. There are two front leg frames 312 each disposed inclined relative to the horizontal plane. The front leg frames 312 extend in substantially the same direction as the handlebar frames 311, respectively. The push handle 315 is of a substantially U-shaped rod structure, with two ends connected to the upper ends of the two handlebar frames 311, respectively. The lower ends of the two handlebar frames 311 are connected to the upper ends of the two front leg frames 312 via two locking joints 314, respectively. The lower ends of the two front leg frames 312 are connected to the ends of the footrest frame 317, respectively. Two front wheel assemblies 318a are connected to the bottom of the footrest frame 317. There are two rear leg frames 313 disposed inclined relative to the horizontal plane. The upper ends of the two rear leg frames 313 are pivotally connected to the two handlebar frames 311, respectively. The lower ends of the two rear leg frames 313 are connected to two rear wheel assemblies 318b, respectively. When the frame 310 is in the unfolded state, the handlebar frames 311, the front leg frames 312, the footrest frame 317, and the push handle 315 are substantially located in the same plane and collectively form a substantially rectangular structure. It should be understood that in other embodiments, the shapes and numbers of the above components of the frame 310 may vary depending on actual needs, and are not specially limited herein.

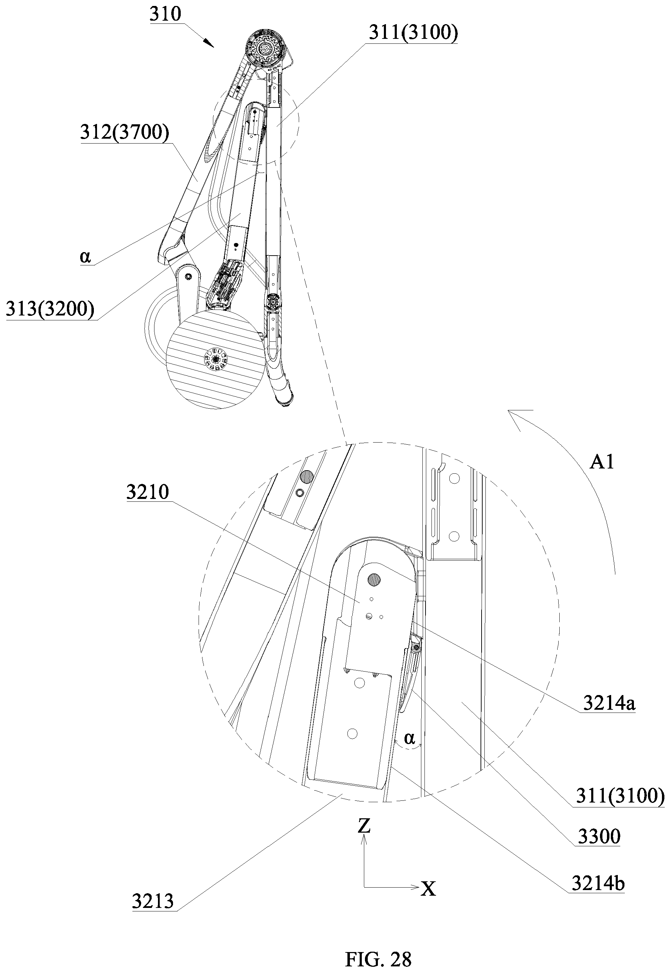

In this embodiment, the first frame body 3100 is the handlebar frame 311 of the frame 310, the second frame body 3200 is the rear leg frame 313 of the frame 310, and the third frame body 3700 is the front leg frame 312 of the frame 310. The rotation member 3300 is located at the side of the rear leg frame 313 facing the push handle 315, i.e., the rotation member 3300 is located at the side of the rear leg frame 313 corresponding to the positive direction of the X-axis. The provision of the rotation member 3300 and the buffer member 3400 can slow down the folding between the handlebar frame 311 and the rear leg frame 313, thereby preventing the violent collision between the handlebar frame 311 and the rear leg frame 313. In addition, as shown in FIG. 28, when the frame 310 is in the folded state, the push handle 315 abuts against the support surface (e.g., the ground) to assist the folded frame 310 to remain standing. In the present disclosure, by slowing down the rotation the second frame body 3200 relative to the first frame body 3100 in the first rotation direction A1, the rotation of the push handle 315 driven by the first frame body 3100 can also be slowed down, thereby preventing the violent collision between the push handle 315 and the support surface which may cause damage to the frame 310.

In other embodiments, the first frame body 3100 and the second frame body 3200 may be other components of the frame 310 that need to slow down their rotation and to prevent the pinching of user's hand. For example, the frame 310 further includes an armrest frame (or dinner plate holder) that may be folded toward the front leg frame 312, and the first frame body 3100 and the second frame body 3200 may be the front leg frame 312 and the armrest frame (or dinner plate holder) of the frame 310, respectively.

In the above frame, the buffer member has a damping effect on the rotation of the rotation member relative to the first frame body in the first rotation direction, which increase the resistance to the rotation of the rotation member relative to the first frame body in the first rotation direction, thereby slowing down the rotation of the second frame body relative to the first frame body in the first rotation direction. As a result, the violent collision between the first frame body and the second frame body in the folding process of the frame can be prevented, or the collision between other components driven by the first frame body and the ground or other structures can be prevented, thereby reducing the risk of damaging the frame.

## Claims

1. A connecting structure, comprising:
a first joint component and a second joint component pivotable relative to each other around an axial direction; and
a connecting member extending through the second joint component in the axial direction and inserted into and screwedly connected to the first joint component to restrict a separation of the first joint component from the second joint component in a direction parallel to the axial direction;
wherein the connecting member is spaced apart from the second joint component.

2. The connecting structure of claim 1, wherein the first joint component is positioned between the connecting member and the second joint component in a radial direction perpendicular to the axial direction to space apart the connecting member from the second joint component in the radial direction.

3. The connecting structure of claim 2, wherein the first joint component comprises a shaft portion extending through the second joint component in the direction parallel to the axial direction, and the shaft portion is positioned between the connecting member and the second joint component in the radial direction.

4. The connecting structure of claim 3, wherein the connecting member is provided with a head portion and a rod portion extending from the head portion in the axial direction, the rod portion is inserted into the shaft portion along the axial direction and threadedly connected to the shaft portion, the head portion is positioned at an outer side of the shaft portion in the axial direction, and the second joint component is positioned between the head portion and the first joint component in the direction parallel to the axial direction.

5. The connecting structure of claim 3, wherein the connecting member further comprises a spacer member, the connecting member is provided with a head portion and a rod portion extending from the head portion in the axial direction, the rod portion is inserted into the shaft portion along the axial direction and threadedly connected to the shaft portion, the head portion is positioned at an outer side of the shaft portion in the axial direction, the spacer member is positioned between the head portion and the second j oint component in the direction parallel to the axial direction to space apart the connecting member from the second joint component in the direction parallel to the axial direction, and the spacer member is unable to rotate relative to the connecting member around the axial direction.

6. The connecting structure of claim 5, wherein the spacer member is sleeved outside of the shaft portion along the direction parallel to the axial direction, and the spacer member is unable to rotate relative to the shaft portion around the axial direction.

7. The connecting structure of claim 6, wherein an inner peripheral surface of the spacer member is positioned adjacent to an outer surface of the shaft portion in the radial direction, and a shape of a cross section of the inner peripheral surface of the spacer member taken along a direction perpendicular to the axial direction and a shape of a cross section of the outer surface of the shaft portion taken along the direction perpendicular to the axial direction are matched with each other and are non-circular.

8. The connecting structure of any one of claims 5-7, wherein the head portion, the spacer member, the second joint component, and the first joint component abut against each other sequentially in the direction parallel to the axial direction.

9. The connecting structure of any one of claims 5-8, wherein the second joint component is provided with a second recess that is recessed away from the head portion in the direction parallel to the axial direction, the spacer member is received in the second recess along the direction parallel to the axial direction, the second recess comprises a second bottom surface, and the spacer member is positioned between the head portion and the second bottom surface in the direction parallel to the axial direction.

10. The connecting structure of claim 9, wherein the second recess comprises an inner surface positioned adjacent to and spaced apart from an outer peripheral surface of the spacer member in the radial direction.

11. The connecting structure of any one of claims 5-10, wherein the spacer member is positioned between the head portion and the shaft portion in the direction parallel to the axial direction and abuts against each of the head portion and the shaft portion.

12. The connecting structure of any one of claims 5-11, wherein an end portion of the shaft portion proximate to the head portion is recessed away from the head portion in the direction parallel to the axial direction to form a first recess, the spacer member is received in the first recess along the direction parallel to the axial direction, the first recess comprises a first bottom surface, and the spacer member is positioned between the head portion and the first bottom surface in the direction parallel to the axial direction.

13. The connecting structure of claim 12, wherein the first recess comprises an outer surface positioned adjacent to an inner peripheral surface of the spacer member in the radial direction, and shapes of cross sections of the inner peripheral surface of the spacer member and the outer surface taken along a direction perpendicular to the axial direction are matched with each other and are non-circular.

14. The connecting structure of any one of claims 1-4, wherein the connecting structure further comprises a spacer member positioned between the connecting member and the second joint component in the direction parallel to the axial direction to space apart the connecting member from the second joint component in the direction parallel to the axial direction, and the spacer member is unable to rotate relative to the connecting member around the axial direction.

15. The connecting structure of claim 14, wherein the spacer member is sleeved outside of the first joint component along the direction parallel to the axial direction, and the spacer member is unable to rotate relative to the first joint component around the axial direction.
